(19) Europäisches Patentamt
European Patent Office
Office européen des brevets

(11) **EP 3 259 441 B1**

(12) **EUROPEAN PATENT SPECIFICATION**

(45) Date of publication and mention
of the grant of the patent:
**19.10.2022 Bulletin 2022/42**

(21) Application number: **16752979.1**

(22) Date of filing: **17.02.2016**

(51) International Patent Classification (IPC):
**E21B 33/14** (2006.01)     **E21B 47/005** (2012.01)
**E21B 47/085** (2012.01)

(52) Cooperative Patent Classification (CPC):
**E21B 33/14; E21B 47/005; E21B 47/085;**
G01V 1/46; G01V 1/50

(86) International application number:
**PCT/US2016/018270**

(87) International publication number:
**WO 2016/134018 (25.08.2016 Gazette 2016/34)**

(54) **INTEGRATED WELL COMPLETIONS**

INTEGRIERTE BOHRLOCHABSCHLÜSSE

COMPLÉTIONS INTÉGRÉES DE PUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2015 US 201562117895 P**

(43) Date of publication of application:
**27.12.2017 Bulletin 2017/52**

(73) Proprietors:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **SHAPOSHNIKOV, Pavel**
**Katy, Texas 77494 (US)**
• **LAW, Matthew**
**207844 (SG)**
• **TOVAR, Gioconda**
**Katy, Texas 77494 (US)**

(74) Representative: **Schlumberger Intellectual Property Department**
**Parkstraat 83**
**2514 JG Den Haag (NL)**

(56) References cited:
WO-A2-2014/165487     WO-A2-2014/165487
US-A1- 2009 152 005     US-A1- 2011 153 300
US-A1- 2014 034 390     US-A1- 2014 192 619
US-A1- 2014 309 936     US-A1- 2014 309 936

• **Pavel Shaposhnikov ET AL: "ADVANCED TECHNIQUES IN INTEGRATED CEMENT EVALUATION", SPWLA 54 th Annual Logging Symposium, 22 June 2013 (2013-06-22), XP055269726, Retrieved from the Internet: URL:https://www.onepetro.org/download/conference-paper/SPWLA-2013-SSS?id=conference-paper/SPWLA-2013-SSS [retrieved on 2016-04-29]**

**Description**

CROSS-REFERENCE TO RELATED APPLICATIONS

This Application claims the benefit of U.S. Provisional Application 62/117,895 filed on February 18, 2015.

BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

A wellbore drilled into a geological formation may be targeted to produce oil and/or gas from certain zones of the geological formation. To prevent different zones from interacting with one another via the wellbore and to prevent fluids from undesired zones from entering the wellbore, the wellbore may be completed by placing a cylindrical casing into the wellbore and cementing the casing in place. During cementing, cement may be injected into the annulus formed between the cylindrical casing and the geological formation. When the cement properly sets, fluids from one zone of the geological formation may not be able to pass through the wellbore to interact with one another. This desirable condition is referred to as "zonal isolation." Yet well completions may not go as planned. For example, the cement may not set as planned and/or the quality of the cement may be less than expected. In other cases, the cement may unexpectedly fail to set above a certain depth due to natural fissures in the formation.

A variety of acoustic tools may be used to verify that cement is properly installed. These acoustic tools pulse acoustic waves as they are lowered through the wellbore to generate acoustic well logs (tracks of data over certain depth intervals of the well). The acoustic well logs may indicate whether liquids or solids are behind the casing in the wellbore at various depths. When the well logs indicate a solid, cement is likely present. When the well logs indicate a liquid, the cement may not have set or may not be present. Because a human operator in the field may judge the meaning of the logs, the decision of whether cement is or is not properly installed may be relatively inexact and may depend on the experience of the operator. US 2014/309936 A1 discloses a computer-implemented system for monitoring and managing well drilling and production operations. The system is in communication with and receives input from various sensors. In general, the system collects real-time sensor data sampled during operations at the well site, which may include drilling operations, running casing or tubular goods, completion operations, or the like. The system processes the data, and provides nearly instantaneous numerical and visual feedback through a variety of graphical user interfaces. A system for managing cementing operations at a well-site is also disclosed.

US 2014/192619 A1 discloses a method for torsional wave logging in a borehole.

This uncertainty also has implications in the context of subsequent well completion operations, including perforating and stimulation operations.

SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

A method according to claim 1 is provided.

The present disclosure also relates to methods that include providing a fluids position map of cement placement along a borehole generated from a dynamic fluid placement simulator, cementing a portion of the borehole, obtaining at least one acoustic tool response over a depth interval in the cemented portion of the borehole, and comparing a measurement value determined from the at least one acoustic tool response to the fluids position map to determine a minimum waiting-on-cement time.

The present disclosure also relates to systems that include a data repository storing drilling data, cement data, and cementing evaluation data from a borehole and a computer processor with instructions capable of providing the drilling data, the cement data, and the cementing evaluation data in a common format and corresponding to a depth along the borehole from which the drilling data, the cement data, and the cementing evaluation data were collected, and mapping the drilling data, the cement data, and the cementing evaluation data into a data map of the borehole along the depth of the borehole.

Other aspects and advantages of the invention will be apparent from the following description and the appended claims.

BRIEF DESCRIPTION OF DRAWINGS

Various aspects of this disclosure may be better understood upon reading the following detailed description and upon reference to the drawings in which:

FIG. 1 is a schematic diagram of a system for verifying proper cement installation and/or zonal isolation of a well, in accordance with an embodiment;

FIG. 2 is a block diagram of an acoustic downhole tool to obtain a well log relating to a material behind casing of the well, in accordance with an embodiment;

FIG. 3 is a flowchart of an integrated cement evaluation workflow for verifying proper cement installation and/or zonal isolation of the well, in accordance with an embodiment;

FIG. 4 is a block diagram relating a response of the acoustic downhole tool to a free pipe or fully cemented pipe condition in the well, in accordance with an embodiment;

FIG. 5 is a flowchart of a method for determining a Solids Presence Indicator (SPI), Solids Index (SI), Solids Azimuthal Coverage Index (SACI), and/or Azimuthal Coverage Indicator (ACI), in accordance with an embodiment;

FIG. 6 is an example well log showing Solids Presence Indicator (SPI) and/or Solids Azimuthal Coverage Index (SACI) in relation to Cement Bond Log (CBL), Acoustic Impedance (AI), and Flexural Attenuation (FA), in accordance with an embodiment;

FIG. 7 is a flowchart of a method for determining a measurement value relating to free pipe casing (Mfp) that may be used in calculating Solids Presence Indicator (SPI), Solids Index (SI), Solids Azimuthal Coverage Index (SACI), and/or Azimuthal Coverage Indicator (ACI), in accordance with an embodiment;

FIG. 8 is a flowchart of a method for determining a measurement value of fully cemented casing (Mfc) that may be used in calculating Solids Presence Indicator (SPI), Solids Index (SI), Solids Azimuthal Coverage Index (SACI), and/or Azimuthal Coverage Indicator (ACI), in accordance with an embodiment;

FIG. 9 is a flowchart of a method for determining a measurement value of a free pipe threshold (Mfpt) that may be used in calculating Solids Presence Indicator (SPI), Solids Index (SI), Solids Azimuthal Coverage Index (SACI), and/or Azimuthal Coverage Indicator (ACI), in accordance with an embodiment;

FIG. 10 is a series of plots of Acoustic Impedance (AI) histograms that may be used to add certainty to determining the measurement value of a free pipe threshold (Mfpt), in accordance with an embodiment;

FIG. 11 is a series of plots of Flexural Attenuation (FA) histograms that may be used to add certainty to determining the measurement value of a free pipe threshold (Mfpt), in accordance with an embodiment;

FIG. 12 is another example well log showing Solids Presence Indicator (SPI) and/or Solids Azimuthal Coverage Index (SACI) in relation to Cement Bond Log (CBL), Acoustic Impedance (AI), and Flexural Attenuation (FA), in accordance with an embodiment;

FIGS. 13 and 14 are well logs for a first example circumstance that may benefit from the Solids Presence Indicator (SPI), Solids Index (SI), Solids Azimuthal Coverage Index (SACI), and/or Azimuthal Coverage Indicator (ACI), in accordance with an embodiment;

FIGS. 15-17 are well logs for a second example circumstance that may benefit from the Solids Presence Indicator (SPI), Solids Index (SI), Solids Azimuthal Coverage Index (SACI), and/or Azimuthal Coverage Indicator (ACI), in accordance with an embodiment;

FIG. 18 is a flowchart of a method for integrated cement evaluation, in accordance with an embodiment;

FIG. 19 is a block diagram of various factors that may be considered in the integrated cement evaluation of FIG. 18, in accordance with an embodiment;

FIG. 20 is a flowchart of a method for evaluating the factors that may be considered in the integrated cement evaluation of FIG. 18, in accordance with an embodiment;

FIG. 21 is a flowchart of a method for performing integrated cement evaluation, in accordance with an embodiment;

FIG. 22 is a block diagram of an integrated well log for integrated cement evaluation, in accordance with an embodiment; and

FIG. 23 is an example of an integrated well log for integrated cement evaluation, in accordance with an embodiment.

FIG. 24 is an example of an integrated well log for integrated cement evaluation that includes recommendations for subsequent well operations, in accordance with an embodiment.

FIG. 25 is an example of an integrated well log for integrated cement evaluation that includes recommendations for subsequent well operations, in accordance with an embodiment.

FIG. 26 shows a system according to embodiments of the present disclosure.

FIGS. 27-29 show a workflow according to embodiments of the present disclosure.

DETAILED DESCRIPTION

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of the present disclosure relate generally to systems and methods for evaluating cement behind a casing of a wellbore and applying such evaluations to the planning and execution of subsequent well completion operations. Workflows according to some embodiments may generally include pre-job planning operations, drilling operations, and cement placement and evaluation, where during drilling operations and/or cement placement and evaluation, different aspects of the pre-job planning operations may be validated, modified or used for further analysis. For example, embodiments of the present disclosure may relate to integrated workflows for optimizing cementing job design and placement from a pre-job planning phase, while drilling and during cement placement and evaluation phases. Further, methods according to some embodiments include integrating drilling system design workflow(s) (e.g., including formation analysis and well planning) with zonal isolation workflow(s) (e.g., including well construction and cementing) in order to provide an integrated solution for predicting, analyzing and assuring wellbore quality, cement placement and cement evaluation.

According to embodiments of the present disclosure, an integrated wellbore isolation plan may include designing and integrating together a drilling plan, a cementing plan and a cementing evaluation plan, such that design parameters and results from each of the drilling plan, cementing plan and cementing evaluation plan may be used to set and achieve desired zonal isolation parameters. The parameters of each of the drilling plan, cementing plan and cementing evaluation plan in an integrated wellbore isolation plan may interrelate with one another, where together and separately, the parameters of the plans affect zonal isolation of a borehole. For example, a borehole shape and quality may effect cement placement along the borehole, and cement placement and uniformity may effect whether sufficient isolation along the borehole is achieved. In another example, wellbore trajectory and caliper information collected during the drilling and formation evaluation phase may be coupled to data on mud and cement rheology to perform engineering simulations used to guide decisions on the cementing process.

Because parameters of a drilling plan, cementing plan and, in some embodiments, a cementing evaluation plan may collectively and separately affect zonal isolation of a borehole, workflows for designing and performing different stages of well completion may be integrated and considered together in an integrated wellbore isolation plan. In an example, an integrated wellbore isolation plan may include integrating a well planning workflow and a well construction workflow. During the well planning phase, offset wells, rock mechanics information and other available data can be used by a multi-discipline well construction team to identify main drilling risks, such as possible lost circulation or overpressure zones by layers with the objective of delivering a quality wellbore that enhances the prospects of achieving the zonal isolation objectives of the well. Additional factors, such as drilling parameters, borehole shape, drilling fluids, casing designs, formation properties and optionally cement evaluation methods, including post cement placement activities that contribute to the end result of achieving zonal isolation objectives, may be considered concurrently in the well planning stage and/or in the cement evaluation stage. Considering the different stages concurrently may assist in planning for contingencies and in avoiding unplanned remedial work.

The process of designing and performing an integrated wellbore isolation plan according to embodiments of the present disclosure may overcome data sharing hurdles otherwise present in wellbore isolation processes and increase confidence in zonal isolation, thereby providing a level of well integrity assurance. The process of executing an integrated wellbore isolation plan may be separated into three distinct elements: drilling a quality wellbore (e.g., using the drilling geomechanics data and real time borehole quality monitoring provided from the integrated wellbore isolation plan); executing a cement program based on well-specific information (e.g., using fluid data, drilling and wellbore data from the integrated wellbore isolation plan); and evaluating the cement using cement evaluation tools according to embodiments of the present disclosure (e.g., using a cement evaluation software platform). By designing an integrated wellbore isolation plan prior to drilling, cementing and cement evaluation, the likelihood of achieving zonal isolation objectives may be increased, and accurate confirmation of such achievement may be supported by the cement evaluation tools of the present disclosure. Confirmation may be provided by running cement evaluation tool(s) at a time appropriate given the particular well condition, cement system, mud system, and how they interact. For example, pre-job laboratory studies quantifying the impact of mud contamination on cement set-times may provide guidance on when to perform cement evaluation logging (referred to herein as "waiting-on-cement time").

According to embodiments of the present disclosure, a method for planning a well completion operation may include collecting data for a borehole, designing an integrated wellbore isolation plan based on the collected data, the integrated wellbore isolation plan including integrating a drilling plan and a cementing plan for the borehole, and setting zonal isolation parameters for the borehole based on the integrated wellbore isolation plan. In some embodiments, an integrated wellbore isolation plan further includes a cementing evaluation plan, where zonal isolation parameters for the borehole are set based on the integrated drilling, cementing and cementing evaluation plans.

Data collected for a borehole may include formation data and other data used for designing the drilling plan, including, for example, petrophysics data, horizons data, geology data, formation stresses, and wellbore stability data. Measurements characterizing a formation may be used in modeling a reservoir system, for example, by using a mechanical earth model ("MEM"). As used herein, an MEM is a numerical representation of the geomechanical state of the reservoir, field, or basin. In addition to property distribution (e.g., density, porosity) and fracture system, an MEM may incorporate pore pressures, state of stress, and rock mechanical properties. The stresses on the reservoir may be caused by overburden weight (vertical stress), any superimposed tectonic forces, localized forces (e.g., resulting from faults, fractures, laminations, depositional orientation, variability in rock mechanical properties, etc), and by production and injection. Various types of MEMs may be used, such as well-centric MEMs (concentrated on borehole effects, such as breakouts, collapses, sanding, and wellbore stability issues, and may be used for near-well dynamic simulations) and field wide MEMs (may be used to evaluate the effects of drilling and producing for full-field dynamic simulations), which may include time-lapse modeling of fluid flow and pressure, temperature changes, and associated effects on stresses.

In some embodiments, a drilling plan, including placement of a borehole, may be designed based on an MEM of a formation, where the placement of the borehole through the formation may be selected based on geomechanics of the formation modeled in the MEM.

In early exploration stages, information and data may be limited to, for example, seismic data and one or a few offset wells. An MEM of a formation from early exploration stages may provide an initial expectation of wellbore or reservoir response. As new information accumulates, such as from additional data acquired in wellbores after or while drilling, well test data, or subsequent seismic surveys, a more detailed MEM of the rock formations at the reservoir level may be developed. MEMs may be used, for example, for designing completions, performing fracture stimulation, and simulating reservoir production.

Formation data collected from a formation of interest and/or previously acquired data from similar formations may be used for constructing a simulation of a preliminary borehole design extending through the formation of interest, and placement of a borehole may be selected based on the simulation results from the simulating. For example, a preliminary borehole design may be simulated as being drilled through a formation of interest represented by an MEM of the formation. If preselected zonal isolation parameters may be achieved based on the results of the simulation, a real borehole may be drilled through the formation according to the preliminary borehole design. If preselected zonal isolation parameters are not achievable based on the results of the simulation, the preliminary borehole design may be modified and re-simulated.

According to some embodiments, at least a portion of a borehole may be drilled according to a predetermined drilling plan, where borehole conditions may be monitored during drilling the borehole, in real time. As the borehole conditions are being monitored, comparison between the measured borehole conditions and the predetermined drilling plan may be made. The drilling plan and/or drilling operations may be updated or modified based on the real time measurements of the borehole conditions during drilling. For example, comparison between the measured borehole conditions and the predetermined drilling plan may be made to determine if preselected zonal isolation parameters are achievable based on the measured borehole conditions. When the preselected zonal isolation parameters are determined to not be achievable based on the measured borehole conditions, the predetermined drilling plan may be modified based on the measured borehole conditions, and further analysis may be conducted to determine if the preselected zonal isolation parameters and/or the cementing plan are to be modified.

Accordingly, embodiments of the present disclosure may include collecting data for a borehole, mapping the collected data onto a data map of the borehole a depth along the borehole, designing an integrated wellbore isolation plan based on at least some of the collected data, setting zonal isolation parameters for the borehole based on the integrated wellbore isolation plan, and determining whether the zonal isolation parameters are achievable based on at least some of the collected data. Collected data may include simulated data from one or more simulations of the borehole and/or measured data from the borehole. For example, formation data may be collected and used for generating a simulation of a preliminary design of a borehole extending through the formation. The formation data and/or simulation results may be mapped onto a data map of the borehole extending through the formation, and an integrated wellbore isolation plan may be designed based at least in part on the collected formation data and/or simulation results. As operations according to the integrated wellbore isolation plan are conducted (e.g., drilling the borehole according to the drilling plan and/or cementing the borehole according to the cementing plan), further data may be collected, such as drilling data and/or cementing data, collected in real time and/or lag time. The further collected data may be used to determine if preset zonal isolation parameters are achievable and/or to update the integrated wellbore isolation plan accordingly.

Collected data may include data gathered from real operations such as a real drilling operation or a real cementing operation, and/or from simulations, depending on, for example, the stage of generating and performing an integrated wellbore isolation plan. For example, prior to and during planning stages of generating an integrated wellbore isolation plan, collected data may include real data gathered from geomechanics studies of one or more formations of interest, offset well analysis, previously drilled boreholes, and/or other preliminary formation data, and simulated data gathered from one or more simulations of a borehole drilled through a formation of interest and/or cementing operations. After initiating performance of the integrated wellbore isolation plan, collected data may further include real data gathered during such performance. For example, as a borehole is being drilled in accordance with an integrated wellbore isolation plan, collected data may further include real data gathered from the drilling operation.

Collected drilling data (real or simulated) may include, for example, well trajectory, borehole quality, drilling parameters, and drilling events, as well as drilling fluid data, such as rheology of the drilling fluid, hydraulics, compatibility, equivalent circulating density (effective density of the drilling fluid that combines mud density and annular pressure drop), and equivalent static density of the drilling fluid. Collected formation data may include, for example, zones of interest, reservoir properties, stresses, formation types, and others. Collected cementing data may include, for example, rheology of the cement, compatibility, strength development, placement objectives. Collected data for cement evaluation may include, for example, waiting-on-cement time (also referred to as time to log), top of cement (TOC), and isolation objectives.

Upon drilling a borehole according to a predetermined drilling plan in an integrated wellbore isolation plan, at least a portion of the drilled borehole may be cemented according to the predetermined cementing plan in the integrated wellbore isolation plan.

According to embodiments of the present disclosure a cementing plan may be simulated prior to cementing according to the cementing plan. The cementing may be monitored in real time to provide a real-time comparison between measured cementing data from the cementing being monitored and simulated cementing data from the simulated cementing plan. In some embodiments, a cementing operation may be monitored in real time, where deviations measured in the real cementing operation from a preselected cementing plan and/or from the simulated cementing plan may allow for action to be taken to correct or modify the real cementing operation. For example, if during a cementing operation being carried out according to a preselected cementing plan, one or more parameters of the cementing operation (e.g., pressure or return rate) is measured in real time as deviating from the preselected cementing plan, one or more actions may be taken to fix the detected problem or modify the cementing operation. Corrective actions may include, for example, modifying flow rate of the cement or circulating out fluids from the borehole. In some embodiments, a cementing operation may be monitored in real time to provide a post job report soon after completion of the cementing operation, e.g., up to a few hours after the cementing pumps shut down, where the post job report may include a first evaluation of whether the objectives of the cementing plan were accomplished.

Cementing data acquired from a real cementing operation may be used to update a simulation of the cementing operation. For example, a preliminary cementing plan for cementing at least a portion of a borehole may be simulated (e.g., using borehole shape and size data, formation data relating to formation type, porosity, etc. around the borehole wall, cement composition data, previously conducted cementing operations, etc.), and the cementing plan may be initiated through the borehole. As the cementing operation is being carried out, cementing data may be acquired in real time and/or in lag time via one or more monitoring tools, such as logging equipment, sensors (e.g., pressure and/or temperature sensors), and flow meters. The cementing data may be compared with corresponding predicted data in the cementing simulation, and differences between real cementing data and predicted cementing data may be corrected in the cementing simulation by replacing the mis-predicted cementing data with the real cementing data to update the cementing simulation.

Further, a preselected cementing plan may be simulated prior to cementing according to the cementing plan to determine if preselected zonal isolation parameters are achievable. Because cementing performance may rely heavily on the quality of the borehole being cemented, the preselected cementing plan may be designed based, at least in part, on the drilling plan, as well as, any collected drilling and borehole data. When the zonal isolation parameters are determined to not be achievable using the preselected cementing plan in the borehole of the operation, the preselected cementing plan may be modified. For example, when preset zonal isolation parameters are determined to not be achievable upon running a simulation of the preselected cementing plan, the preselected cementing plan may be modified, and optionally, the modified cementing plan may be re-simulated. In some embodiments, when preset zonal isolation parameters are determined to not be achievable upon gathering cementing data from a real cementing operation being carried out according to a preselected cementing plan, the preselected cementing plan may be modified.

A cement evaluation plan may be designed based, at least in part, on a preselected or modified cementing plan. After a borehole has been cemented according to the preselected or modified cementing plan, evaluation of the cementing job may be performed according to the pre-designed cement evaluation plan. In some embodiments, a pre-designed cement evaluation plan may be modified as cementing data is collected from the cementing job.

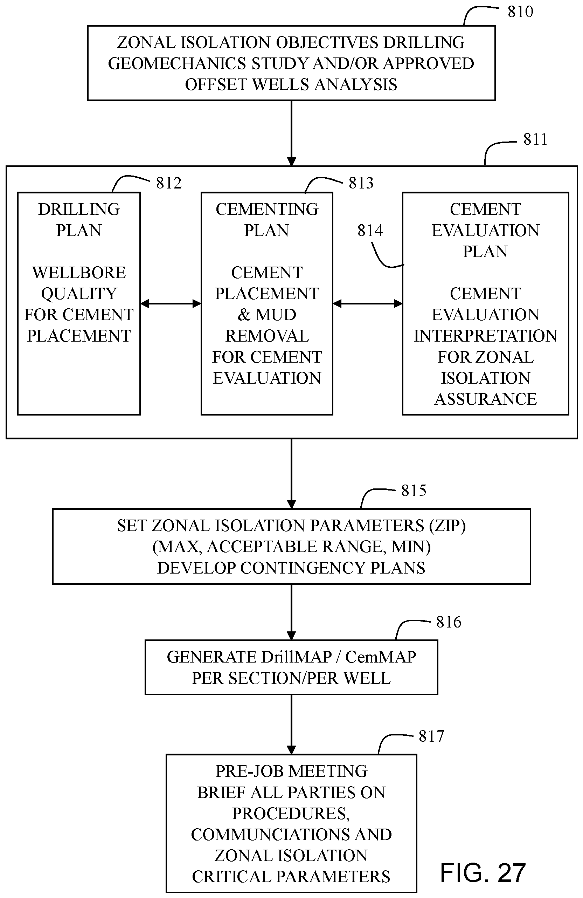

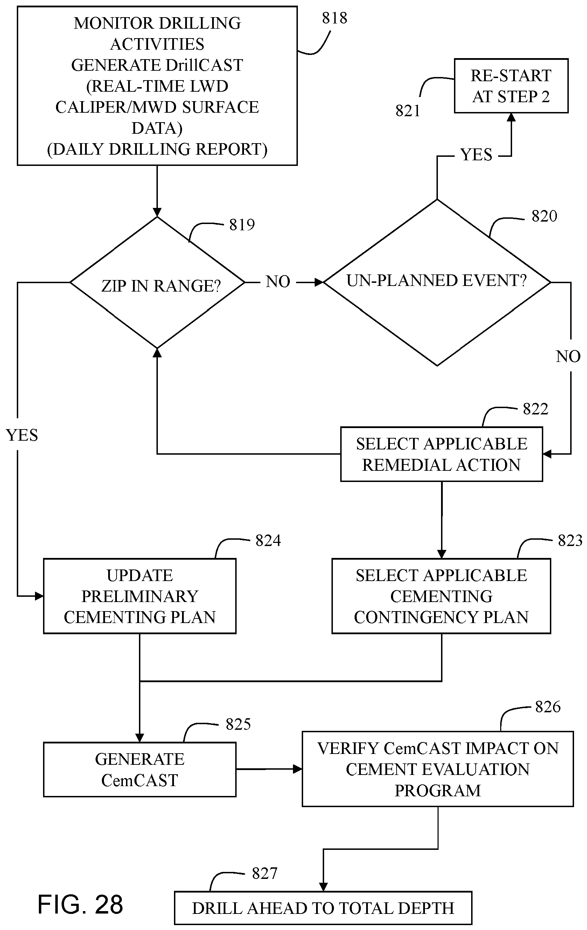

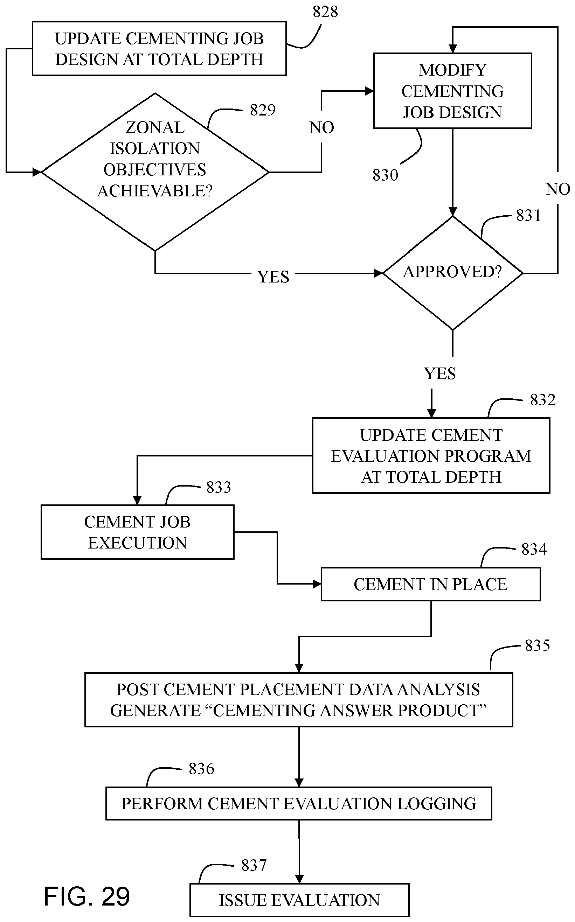

FIGS. 27-29 show an example of a workflow for designing and performing an integrated wellbore isolation plan, including a pre-job planning phase (shown in FIG. 27), a drilling operations phase (shown in FIG. 28) and a cement placement and evaluation phase (shown in FIG. 29). During the pre-job planning phase, one or more preliminary analyses (810) may be conducted, including for example, determining zonal isolation objectives, conducting one or more geomechanics studies, and/or conducting one or more offset well analyses. As discussed herein, zonal isolation objectives may be determined, for example, based on preliminary data collected on a formation of interest (real and/or simulated data), data collected during one or more of the preliminary analyses, and desired end results for production. Upon preliminary analyses and data collection, an integrated wellbore isolation plan (811) may be designed, including designing an interrelated drilling plan (812), cementing plan (813), and cement evaluation plan (814). For example, the drilling plan (812) may include determining drilling parameters to provide a wellbore with sufficient quality for receiving a desired cement placement, according to the cementing plan (813). The cementing plan (813) may include, for example, determining cement placement for achieving zonal isolation objectives and determining mud removal parameters to provide sufficient mud removal for cement evaluation in accordance with the cement evaluation plan (814). The cement evaluation plan (814) may include, for example, determining a waiting-on-cement time for evaluation of the cementing job performed in accordance with the cementing plan (813) and cement evaluation interpretation for zonal isolation assurance (e.g., using a cement evaluation software platform).

Zonal isolation parameters may be set (815) based on the zonal isolation objectives (810) and the integrated wellbore isolation plan (811). Zonal isolation parameters may include, for example, maximum areas isolated, minimum areas isolated, ranges of cement coverage, uniformity of cementing, and other isolation factors. Contingency plans may be developed, including setting zonal isolation parameters for different potential deviations in the drilling plan, cementing plan and/or cementing evaluation plan. Zonal isolation objectives and parameters and an integrated wellbore isolation plan may be defined in the planning phase of the drilling process, so that the borehole to be drilled may be cementable according to the preselected zonal isolation objectives and parameters.

Outputs in the planning phase may include a map of a borehole to be drilled (e.g., a DrillMAP showing well trajectory) according to the drilling plan (812) and a map of where to cement along the borehole (e.g., a CemMAP) according to the cementing plan (813). Maps of the borehole to be drilled and where to cement along the borehole may be generated (816), for example, using an MEM providing wellbore stability, pore pressure, and fracture gradient analyses and/or using other preliminary geomechanics data. In some embodiments, formation evaluation logs and seismic, core, and drilling data (e.g., from offset wells or previously drilled boreholes) may be used to build a one- or three-dimensional MEM to create a drilling plan.

Optionally, one or more pre-job meetings (817) may be held to communicate procedures and zonal isolation parameters to interested parties involved with the process.

Referring to FIG. 28, the drilling phase may include drilling a real borehole according to the drilling plan (812, shown in FIG. 27) and monitoring such drilling activities (818). Monitored drilling data (i.e., real drilling data retrieved during monitoring of the drilling activities) may be displayed as a function of time or depth, or in numerical formation. For example, monitored drilling data may be displayed in a map of the borehole, where the monitored drilling data may be formatted as a function of depth and displayed along the map of the borehole at corresponding depths to which the retrieved drilling data represents. In some embodiments, the monitored drilling data may be used to update the map of the borehole generated during the planning phase. Monitored drilling data may include, for example, real-time data collected from logging while drilling (LWD) tools such as calipers and other acoustic LWD tools, surface data from measurement-while-drilling (MWD) tools, data collected from daily drilling reports, directional survey data, temperature readings (e.g., from one or more temperature sensors), pore and fracture pressure data, and lithology data. Further monitored drilling data may be used to generate a forecast of geomechanics conditions predicted for the current drilling operations.

The monitored drilling data may be used to monitor possible deviations from the drilling parameters in the drilling plan (812) and evaluate the possible incidences on the cementing plan (813). Deviations from a predetermined drilling plan during real drilling may result in one or more of the zonal isolation parameters being affected and falling outside the preset range. According to embodiments of the present disclosure, monitored drilling parameters may be used to determine (819) if the zonal isolation parameters are within the range preset at step (815). When one or more zonal isolation parameters are not within range, the monitored drilling data may be interpreted to determine if an un-planned or planned drilling event occurred (820). If the drilling event was un-planned, an updated integrated wellbore isolation plan (811) may be designed (821), taking into account the un-planned event (820). If the drilling event was planned, but one or more zonal isolation parameters are not within the preset range, an applicable remedial action may be taken (822). An applicable contingency cementing plan (e.g., a contingency plan developed when the zonal isolation parameters were set (815)) may then be selected (823) to account for the remedial action taken (822). When the zonal isolation parameters are within range, the cementing plan (813) may be updated (824) to account for the monitored drilling data. For example, the updated cementing plan may reflect any changes or deviations from the preliminary drilling plan (812) measured in the monitored drilling data.

An output in the drilling phase may include a predictive cement placement map as a function of depth along the borehole (825) based on updates generated from monitoring of the drilling activities. For example, a predictive cement placement map may be generated (825) based on an updated cementing plan (824), based on a selected contingency cementing plan (823), or based on any other optimized design of a cementing plan optimized in response to real borehole data (e.g., an optimized cementing plan based on real borehole data acquired during monitoring drilling activities). The predictive cement placement map may then be evaluated to verify (826) the cement evaluation plan (814). Drilling activities may continue until a total depth is reached (827).

Referring now to FIG. 29, the cement placement and evaluation phase is shown. Upon drilling to the total depth (827, shown in FIG. 28), the cementing plan may be updated (828). One or more evaluations may be conducted to determine if the zonal isolation objectives selected in the planning phase are achievable (829). If one or more zonal isolation objectives are determined to not be achievable, the cementing plan may be modified (830), and the modified cementing plan may be considered for approval (e.g., if the cost, timing, other factors are acceptable) If the zonal isolation objectives are determined to by achievable, the updated cementing plan (828) may be considered for approval (831). Approval (831) of an updated cementing plan (828) or of a modified cementing plan (830) may be granted by one or more interested parties to the wellbore isolation operation, or approval (831) may be granted according to an automated system when preselected factors or parameters are within a preselected range.

Upon approval (831) of a cementing plan that has been updated or modified at the total depth, the cement evaluation plan (814) may be updated (832). The cementing job may then be executed (833) according to the cementing plan that has been updated or modified at the total depth to cement a casing in place within the drilled borehole (834). During the cementing job (833), real-time or lag-time cementing data may be gathered. Cementing data gathered during the cementing job may be used, for example, in concurrent and/or subsequent analysis of the cementing job. For example, cementing data gathered during the cementing job may be compared with the cementing plan, concurrently with executing the cementing plan, to monitor if the cementing job is going according to plan. In some embodiments, a post cement placement data analysis may be performed (835), which may include analysis of cementing data gathered during and/or after the cementing job to determine one or more parameters of the cementing job.

A waiting-on-cement time (time for the cement to cure) may be determined prior to performing a cement evaluation to determine the amount of time after completion of the cementing job to wait until performing the cement evaluation. The waiting-on-cement time may be determined, for example, using a simulation of the cementing job to calculate the curing time of the cement along the simulated borehole and/or lab testing of the cement used in the cementing job.

According to embodiments of the present disclosure, cement placement along a borehole may be simulated to determine when to perform a cementing evaluation plan. A dynamic fluid placement simulator may be used to conduct the simulating, where the dynamic fluid placement simulator is constructed based on previously collected real cementing data. For example, previously collected real cementing data may be collected from previously performed cementing jobs, from lab testing of the cement being used in the current cementing job and/or from real-time cementing data collected in beginning phases of a current cementing job.

After completion of the cementing job, cement evaluation logging may be performed (836) according to the updated cement evaluation plan (832). Cement evaluation logging may include running a logging tool downhole to measure one or more characteristics of the cementing job (e.g., an acoustic logging tool).

An isolation evaluation of the downhole isolation and wellbore integrity may then be issued (837) based on the cement evaluation data. The isolation evaluation may include a report of the zonal isolation parameters of the cemented portion of the borehole and whether the zonal isolation objectives selected during the planning phase were achieved. For example, an isolation evaluation may report whether a planned top of cement ("TOC"), azimuthal coverage and zonal isolation strategy were achieved.

While the various steps in the flowchart shown in FIGS. 27-29 are presented and described sequentially, some or all of the steps may be executed in different orders, may be combined or omitted, and some or all of the steps may be executed in parallel. Furthermore, the steps may be performed actively or passively. For example, some steps may be performed using polling or be interrupt driven in accordance with one or more embodiments of the disclosure. By way of an example, determination steps may not require a processor to process an instruction unless an interrupt is received to signify that condition exists in accordance with one or more embodiments of the disclosure. As another example, determination steps may be performed by performing a test, such as checking a data value to test whether the value is consistent with the tested condition in accordance with one or more embodiments of the disclosure.

When planning, drilling and/or completing a well, there are possibilities of deviations from an original well construction plan. The possibility of such deviations are dependent on the well construction, including drilling and cementing, which thus demands effective planning and execution for achieving zonal isolation objectives. By using workflows according to embodiments of the present disclosure, improvements in well planning and construction may be achieved, including planning and achieving zonal isolation objectives, which may thus enhance well integrity assurance throughout the life of the well.

For example, cementing design has historically been a static process largely independent of the other processes in the drilling and other completion phases. The success or failure of zonal isolation has been previously attributed to the cement placement without analyzing in detail various factors, such as drilling parameters, borehole shape, drilling fluids, casing designs, formation properties and cement evaluation methods including post cement placement activities that contribute to the end result of achieving zonal isolation objectives. However, integrated approaches according to embodiments of the present disclosure, such as described above, may account for and integrate such factors for achieving zonal isolation objectives. For example, integrated workflows of the present disclosure may begin with providing a detailed geomechanics study building an MEM to identify drilling geo-hazards and improved well placement, then real-time monitoring of drilling parameters and applying remedies to deliver improved wellbore quality, which may provide effective mud removal and cement placement design to meet zonal isolation objectives, which may be verified using improved interpretation of cement evaluation logs, e.g., using cement evaluation tools and methods described below.

Further, embodiments of the present disclosure may incorporate available real-time data into the well construction process (e.g., by using collected real-time data in integrated workflows according to embodiments of the present disclosure), which may optimize the well construction process. For example, continuous monitoring of borehole conditions while drilling allows real-time, proactive responses to drilling issues. Success may be measured by increases in drilling speed; however additional value may be extracted from the real-time data by optimizing the quality of the borehole, not just the rate-of-penetration (ROP). An improved quality borehole may also reduce drilling time by improving hole cleaning, casing running, and fluid displacements, all of which may contribute to optimized cement placement.

As described herein, borehole quality greatly impacts cement placement, and thus also affects achievement of zonal isolation objectives. Thus, understanding and evaluating wellbore quality during both well construction planning and drilling phases (e.g., in accordance with embodiments disclosed herein) may increase the assurance in providing effective cement placement and achieving desired zonal isolation objectives in particular section(s) of the well. Borehole quality may be associated with a directional drilled borehole that is smooth, in-gauge, and has minimal spiraling. Several technical papers have used the following factors when defining borehole quality:

1. Straight borehole: when there is minimal tortuosity and minimal hole spiraling (micro-tortuosity);

2. Round gauge hole: when there is minimal wellbore break-out, no washouts, and hole not undergauge;

3. Smooth borehole: when there is minimal ledging;

4. Clean hole: when there is minimal residual cuttings;

5. Integrity: when there is no leakage, no formation damage;

6. Fit for purpose: when casings or logs can run to depth with ease.

Borehole quality factors may be ranked and indexed to provide an indication or to compare borehole quality. Further, as borehole quality factors are associated with several phases of well construction, different factors may be used when trying to define or quantify borehole quality, depending on the stage of well construction. For example, a borehole from a cementing phase of well construction indexed as having relatively high quality may be drilled completely in gauge, casing achieves greater than 90% stand-off and the planned slurry and displacement substantially follows the cementing plan.

According to some embodiments of the present disclosure, an isolation evaluation workflow may include an analysis phase, a forecasting phase, and a measuring phase. The analysis phase may include correlating data to formulate job objectives based on the formation zones to be isolated, indication of borehole shape and/or quality, and the effect of the borehole shape and/or quality on cement placement data. For example, during drilling, before drilling and/or after drilling (e.g., for offset wells), formation characterization logs, such as gamma ray, resistivity, density, porosity, delta compressional, and other formation evaluation logs, may be used to evaluate the effect of the borehole shape and/or quality on the cement barrier setting process. By analyzing real-time borehole quality data, such as caliper, deviation, and inclination data, the cement design of the borehole may be mitigated or adjusted to accommodate the borehole shape and/or quality in real time (e.g., as the borehole is being drilled). As used herein, a borehole quality may refer to, for example, uniformity in shape and/or size, deviations from a planned shape or size of the borehole, and/or deviations from a planned borehole trajectory.

The forecasting phase may include using collected data to design a zonal isolation strategy, including, for example, selecting a top of cement location and cement placement techniques that may be used to achieve the zonal isolation strategy. The cementing strategy may be simulated, for example, by using collected data from a borehole drilled or being drilled, or from a simulation of a borehole to be drilled, to simulate the borehole and then simulate cementing the borehole according to a designed zonal isolation strategy. In some embodiments, an integrated layout combining one or more data logs of a borehole and cementing placement information may be generated, where the collected data may be mapped as a function of depth along the borehole. A top of cement and cementing placement forecast may be generated from one or more simulations and/or an integrated layout of collected data mapped as a function of depth along the borehole.

The measuring phase may include running one or more cementing evaluation logs (e.g., an acoustic log) along a cemented portion of a borehole to verify downhole isolation, and comparing the cementing evaluation data with the forecasted data. The completed isolation evaluation may be used as a reference for future wells drilled in the same or similar areas.

According to embodiments of the present disclosure, methods of determining a minimum waiting-on-cement time may be used to determine how long after a cementing job to wait until performing a cementing evaluation. According to industry standards, a method of cementing evaluation may include performing one or more cement evaluation logs to verify cement as one of the barrier elements in one or more sections of a well to be isolated. Accuracy and efficiency of performing a cement evaluation log may be improved by understanding cement activity (e.g., placement and curing) during the time from the end of a cement job. For example, if cement evaluation log(s) are run prior to final setting of the cement (before reaching the waiting-on-cement time), the measured properties of the cement may be off, resulting in an inaccurate evaluation of the cementing job. By first determining a waiting-on-cement time, when the cement in a cementing job cures and is set in place, a cement evaluation log may be run after the waiting-on-cement time and thereby collect a more accurate representation of the well completion operation.

Cement characteristics in a cementing job may be better understood by using simulations of fluid placement in a wellbore in combination with lab testing measurements of the cement slurry to more accurately predict the waiting-on-cement time in a well completion operation. For example, according to embodiments of the present disclosure, knowledge on fluids positions based on acquired cementing job data and predicted acoustic properties of the fluids with limited measurements may be used to determine a minimum waiting-on-cement time before running a cement evaluation log. Measurements may include using an ultra sonic compressive strength analyzer (UCA) or other acoustic measurement tool to measure acoustic properties of a set cement and other fluids in the annulus at the end of cement placement. After mapping the acoustic properties of fluids in the annulus in combination with a fluids position map output from a dynamic fluid placement simulator, the time to log may be determined for predictive cement evaluation results.

According to embodiments of the present disclosure, a method of determining a minimum waiting-on-cement time may include measuring at least one property of a cement in a cementing plan and simulating the cementing plan. A simulation of the cementing plan may include providing a fluids position map of cement placement along a borehole generated from a dynamic fluid placement simulator. A dynamic fluid placement simulator may be constructed using borehole data acquired from the borehole being or to be cemented, including, for example, the borehole shape, the borehole integrity and other borehole quality factors, as discussed above.

At least a portion of the borehole may be cemented according to a cementing plan prior to or during running one or more simulations of the cementing plan. At least one acoustic tool response over a depth interval in the cemented portion of the borehole may then be obtained. For example, a preliminary data gathering log may be run (e.g., by running an acoustic measurement logging tool) through the cemented portion of the borehole to collect initial real cement data. A measurement value determined from the at least one acoustic tool response may then be compared to the fluids position map generated from the simulation. When measurement values differ from results of the cementing simulation, the dynamic fluid placement simulator may be updated based the measurement value. Based on comparisons between measured cementing data (e.g., determined from the at least one acoustic tool response) and simulated cementing data of the cementing job, the minimum waiting-on-cement time of the cementing job may be determined.

In some embodiments, at least one modification to the cementing job may be performed, and comparison between the measurement value of the modified cemented portion of the borehole and the fluids position map generated from the cementing simulation may be used to determine a waiting-on-cement time.

Further, in some embodiments, rather than or in addition to collecting measured cement data from a preliminary data gathering log (e.g., by running an acoustic measurement logging tool through the cemented portion of the borehole to collect initial real cement data), real cement data may be collected from measuring one or more properties of the cement outside of the wellbore being constructed. For example, cement to be used in a cementing job of a borehole may be tested in a lab setting, outside of the borehole, to determine one or more properties of the cement. Measurement values of the real cement data determined from lab testing of the cement may be compared with simulated cement data from a simulation of the cementing job, and optionally, also with real cement data collected from preliminary logging in the borehole being cemented. By comparing real cement data with simulated cement data, a more accurate representation of the cementing plan performance may be provided, thus allowing a more accurate waiting-on-cement time to be calculated based on the predicted placement and curing time of the cement used in the cementing job.

Once a waiting-on-cement time is determined, a cement evaluation plan may be updated to include performing a cement evaluation log after the waiting-on-cement time has been reached after completion of the cementing job.

Further, once a waiting-on-cement time is determined and reached, cement evaluation logging may be performed on the cemented portion of the borehole, e.g., by running a cement evaluation log through the cemented portion of a borehole. Methods and systems according to embodiments of the present disclosure may be used to evaluate cement behind a casing in a wellbore. Evaluation of cement behind a casing in a wellbore may be used, for example, to determine quality of a cementing job and zones along the wellbore that have been isolated by the cementing job.

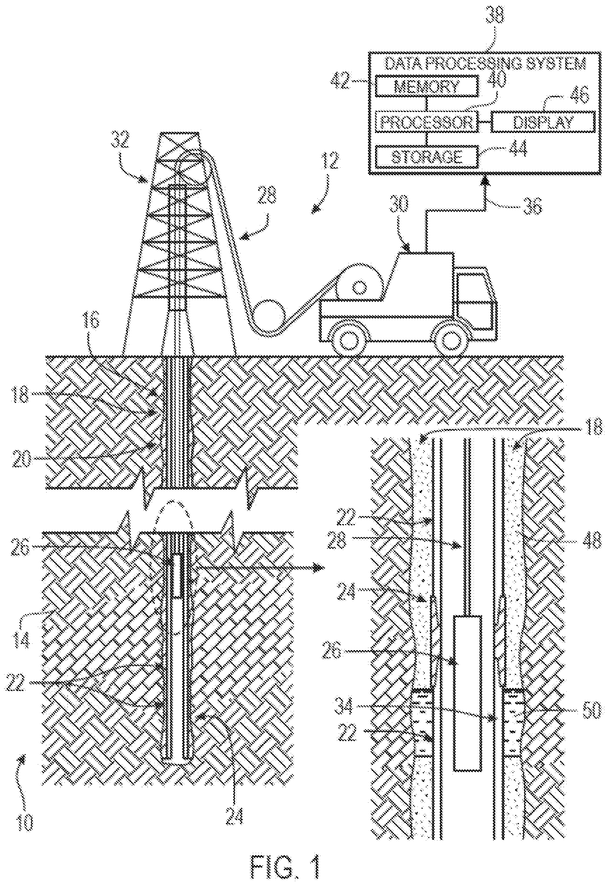

FIG. 1 schematically illustrates an example of a system 10 for evaluating cement behind casing in a well. In particular, FIG. 1 illustrates surface equipment 12 above a geological formation 14. In the example of FIG. 1, a drilling operation has previously been carried out to drill a wellbore 16. In addition, cement 18 has been used to seal an annulus 20 (i.e., the space between the wellbore 16 and casing joints 22 and collars 24) with cementing operations.

As seen in FIG. 1, several casing joints 22 (also referred to below as casing 22) are coupled together by the casing collars 24 to stabilize the wellbore 16. The casing joints 22 represent lengths of conductive pipe, which may be formed from steel or similar materials. In one example, the casing joints 22 each may be approximately 13 m or 40 ft long, and may include an externally threaded (male thread form) connection at each end. A corresponding internally threaded (female thread form) connection in the casing collars 24 may connect two nearby casing joints 22. Coupled in this way, the casing joints 22 may be assembled to form the casing string 18 to a suitable length and specification for the wellbore 16. The casing joints 22 and/or collars 24 may be made of carbon steel, stainless steel, or other suitable materials to withstand a variety of forces, such as collapse, burst, and tensile failure, as well as chemically aggressive fluid.

The surface equipment 12 may carry out various well logging operations to detect conditions of the wellbore 16. The well logging operations may measure parameters of the geological formation 14 (e.g., resistivity or porosity) and/or the wellbore 16 (e.g., temperature, pressure, fluid type, or fluid flowrate). As will be discussed in greater detail below, some of these measurements may be obtained at various points in the design, drilling, and completion of the well, and may be used in an integrated cement evaluation. Other measurements may be obtained that are specifically used to verify the cement installation and the zonal isolation of the wellbore 16. An acoustic logging tool 26 may obtain some of these measurements.

The example of FIG. 1 shows the acoustic logging tool 26 being conveyed through the wellbore 16 by a cable 28. Such a cable 28 may be a mechanical cable, an electrical cable, or an electro-optical cable that includes a fiber line protected against the harsh environment of the wellbore 16. In other examples, however, the acoustic logging tool 26 may be conveyed using any other suitable conveyance, such as coiled tubing. The acoustic logging tool 26 may be, for example, a cement bond logging (CBL) tool, an UltraSonic Imager (USI) tool, and/or an Isolation Scanner (IS) tool by Schlumberger Technology Corporation. Thus, the acoustic logging tool 26 may obtain measurements of amplitude and variable density from sonic acoustic waves, acoustic impedance from ultrasonic waves, and/or flexural attenuation and velocity from the third interface echo. The availability of these five independent measurements may be used to increase confidence in the evaluation interpretation made possible by the acoustic logging tool 26. Using one or more of these or similar measurements, cement quality indicators and/or indices may be derived to further improve cement evaluation. These cement quality indicators and/or indices may include a Solids Presence Indicator (SPI), Solids Index (SI), Solids Azimuthal Coverage Index (SACI), and/or Azimuthal Coverage Indicator (ACI), the calculation of which are described further below.

The acoustic logging tool 26 may be deployed inside the wellbore 16 by the surface equipment 12, which may include a vehicle 30 and a deploying system such as a drilling rig 32. Data related to the geological formation 14 or the wellbore 16 gathered by the acoustic logging tool 26 may be transmitted to the surface, and/or stored in the acoustic logging tool 26 for later processing and analysis. As discussed below, the vehicle 30 may be fitted with or may communicate with a computer and software to perform data collection and analysis.

FIG. 1 also schematically illustrates a magnified view of a portion of the cased wellbore 16. As mentioned above, the acoustic logging tool 26 may obtain acoustic measurements relating to the presence of solids or liquids behind the casing 22. For instance, the acoustic logging tool 26 may obtain an indication of the degree of solidity of the cement 18 at a location 34. When the acoustic logging tool 26 provides such measurements to the surface equipment 12 (e.g., through the cable 28), the surface equipment 12 may pass the measurements as data 36 to a data processing system 38 that includes a processor 40, memory 42, storage 44, and/or a display 46. In other examples, the data 36 may be processed by a similar data processing system 38 at any other suitable location. The data processing system 38 may collect the data 36 and determine one or more indices and indicators that, as discussed further below, may objectively indicate the presence or absence of properly installed cement. Additionally or alternatively, the data processing system 38 may correlate a variety of data obtained throughout the creation of the well (e.g., design, drilling, logging, well completion, etc.) that may assist in the evaluation of the cement. Namely, the processor 40, using instructions stored in the memory 42 and/or storage 44, may calculate the indicators and/or indices and/or may collect and correlate the other data into an integrated cement evaluation well log. As such, the memory 42 and/or the storage 44 of the data processing system 38 may be any suitable article of manufacture that can store the instructions. The memory 42 and/or the storage 44 may be ROM, random-access memory (RAM), flash memory, an optical storage medium, or a hard disk drive, to name a few examples. The display 46 may be any suitable electronic display that can display the logs, indices, and/or indicators relating to the cement evaluation.

In this way, the data 36 from the acoustic logging tool 26 may be used to determine whether the cement 18 has been installed as expected. The logs, indices, and/or indicators may indicate that the cement 18 has a generally solid character (e.g., as indicated at numeral 48) and therefore has properly set. The logs, indices, and/or indicators may also indicate that the cement 18 has a generally liquid character (e.g., as indicated at numeral 50), which may imply that the cement 18 has not properly set. For example, when the logs, indices, and/or indicators indicate the cement 18 has the generally liquid character as indicated at numeral 50, this may imply that the cement has drained away, was of the wrong type or consistency, and/or that fluid channels have formed in the cement 18. By generating the logs, indices, and/or indicators described in this disclosure, ascertaining the character of the cement 18 may be more objective and less dependent on the subjective experience of the human operator in the field that may interpret the data 36 from the acoustic logging tool 26.

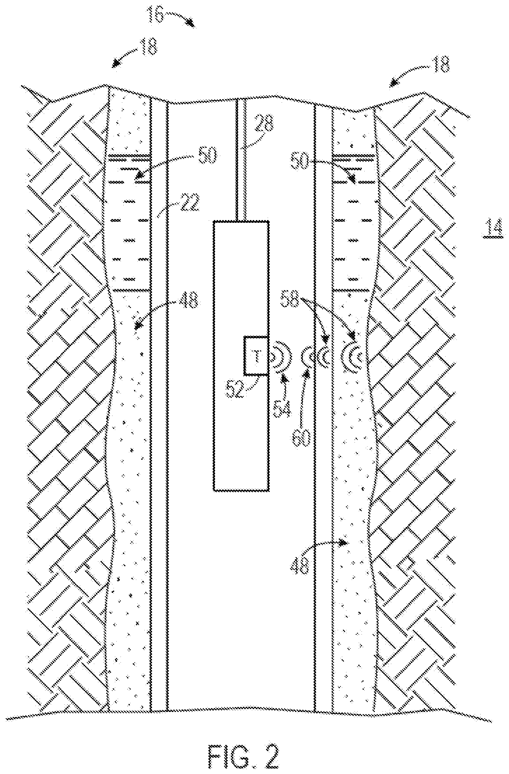

With this in mind, FIG. 2 describes an example of the operation of the acoustic logging tool 26 in the wellbore 16. Specifically, a transducer 54 in the acoustic logging tool 26 may emit acoustic waves 54 out toward the casing 22. Reflected waves 56, 58, and 60 may correspond to interfaces at the casing 22, the cement 18, and the geological formation 14, respectively. The reflected waves 56, 58, and 60 may vary depending on whether the cement 18 is of the generally solid character 48 or the generally liquid character 50. The acoustic logging tool 26 may use any suitable number of different techniques, including measurements of amplitude and variable density from sonic acoustic waves, acoustic impedance from ultrasonic waves, and/or flexural attenuation and velocity from the third interface echo. There are mathematical models with each method that are used to calculate properties of the material in the annulus 20. As mathematical models, many assumptions and simplifications of the real world may be employed. These may involve corrections and calibration or reference point checks.

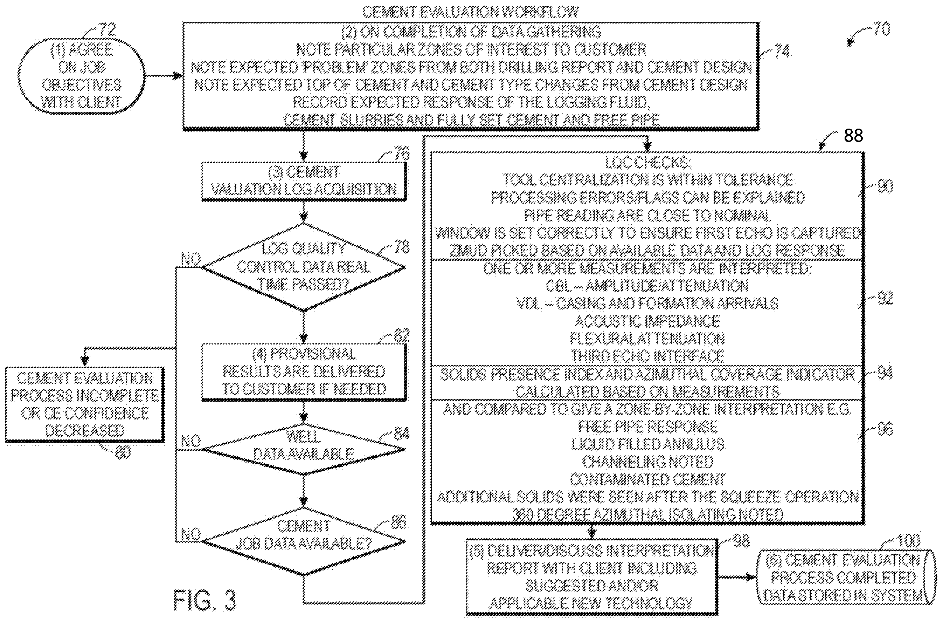

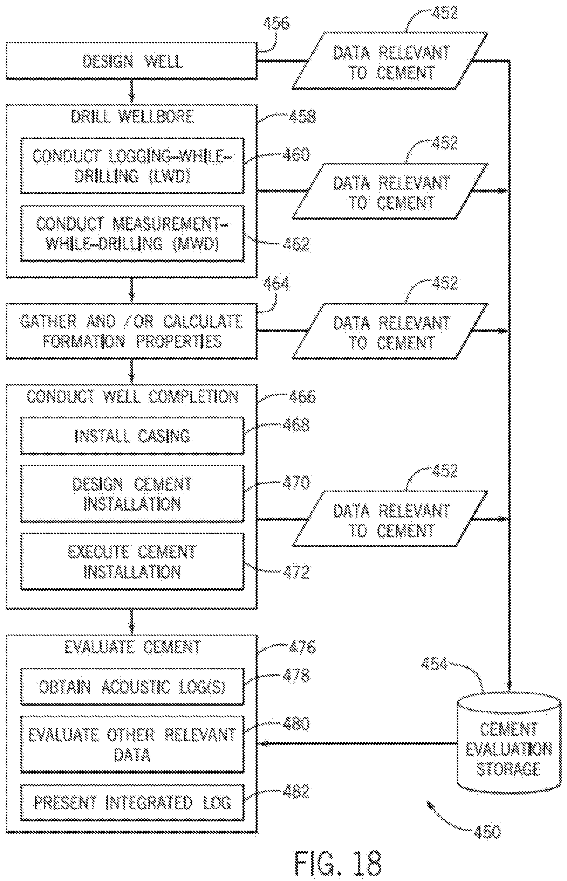

To verify that the cement 18 has properly set, a cement evaluation workflow shown in a flowchart 70 of FIG. 3 may be followed. The cement evaluation workflow in the flowchart 70 may begin after a well has been drilled, completed, and cemented. It should be appreciated, however, that data related to the previous operations creating the well may be stored and used in evaluating the cement 18, as discussed below with reference to FIG. 18.

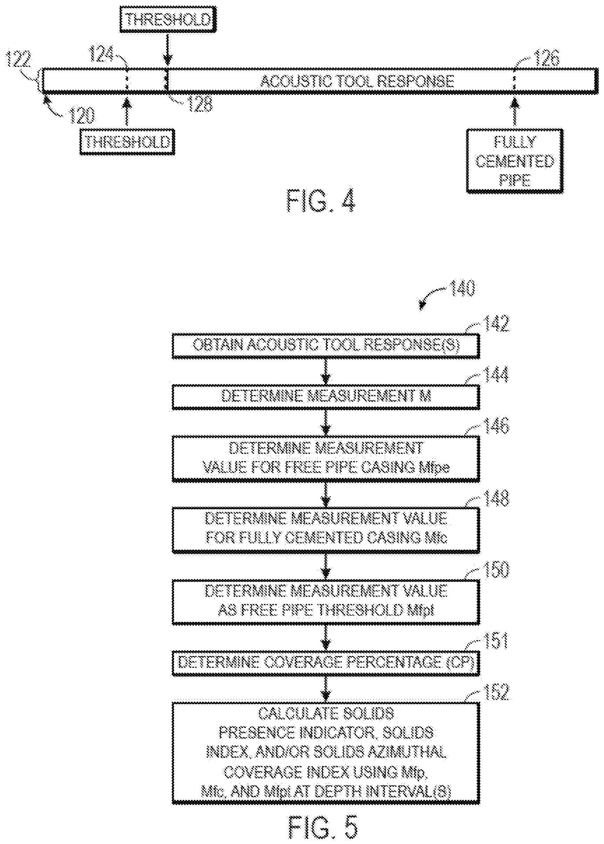

In the cement evaluation workflow of the flowchart 70, objectives of the cement job first may be agreed upon by one or more interested parties in the operation (block 72). Various data may be gathered (e.g., as discussed below with reference to FIGS. 5 and 18-21) (block 74). At this point, particular zones of interest may be noted; expected "problem" zones that may create difficulties from a drilling report and/or cement design may be noted; the expected location of the top of the cement 18 in the well may be noted; changes in the cement type and cement design may be noted; and/or the expected response of logging fluid surrounding the acoustic logging tool 26 in the wellbore 16, cement 18 slurries, fully set cement 18, and free pipe (i.e., no cement 18 behind the casing 22) may be recorded.

A cement evaluation log may be acquired (block 76) using the data 36 from the acoustic logging tool 26 and/or from various other data obtained previously. If the log data does not pass a quality control, whether in real time as shown in FIG. 3 or otherwise as in other embodiments (decision block 78), the cement evaluation process may be deemed incomplete or a degree of confidence of the ultimate cement evaluation may be decreased (block 80). If the log data does pass the quality control (decision block 78), the provisional results may be presented to one or more interested parties (block 82). In addition, if the well data is not available (decision block 84) and/or if the cement job data is not available (decision block 86), the cement evaluation process may be deemed incomplete or a degree of confidence of the ultimate cement evaluation may be decreased (block 80). Additionally or alternatively, incomplete data may be interpolated.

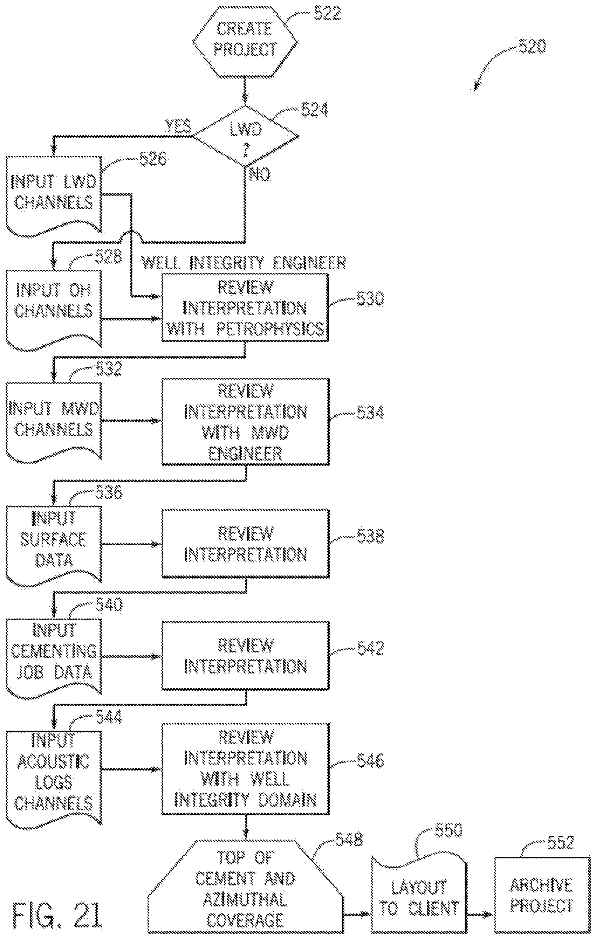

Provided the cement evaluation is not deemed to be incomplete, more complete results may be calculated and compiled (block group 88). For example, various quality control checks may be carried out (block 90). One or more measurements obtained from the response of the acoustic logging tool 26 may be interpreted (block 92). The interpretation of block 92 may take place as discussed below with reference to FIG. 21. At block 94, a Solids Presence Indicator (SPI), Solids Index (SI), Solids Azimuthal Coverage Index (SACI), and/or Azimuthal Coverage Indicator (ACI) may be calculated based on the measurements of block 92 and using confidences determined based on any suitable factors. These confidences may include, for example, statistical analysis of the measurements of block 92 and/or analysis of the quality checks of block 90. The SPI, SI, SACI, and/or ACI of block 94 then may be presented alongside and/or compared with the measurements of block 92 (block 96). This may be presented to one or more interested parties in the operation (block 98) and/or may be stored (block 100).

FIG. 4 illustrates an example of the interpretation of a range of responses 120 of the acoustic logging tool 26 over an interval 122. The particular response of the acoustic logging tool 26 may vary over the depths of the wellbore 16 and may indicate, for example, a free pipe condition 124 when no cement 18 is present behind the casing 22 or a fully cemented pipe 126 when the cement 18 is fully set as expected. The threshold 128 between interpreting fully set cement 18 and improperly set cement 18 (or a lack of cement 18) may be determined in an objective fashion to generate the Solids Presence Indicator (SPI), Solids Index (SI), Solids Azimuthal Coverage Index (SACI), and/or Azimuthal Coverage Indicator (ACI).

As shown in a flowchart 140 of FIG. 5, the Solids Presence Indicator (SPI), Solids Index (SI), Solids Azimuthal Coverage Index (SACI), and/or Azimuthal Coverage Indicator (ACI) may be calculated after obtaining one or more responses of the acoustic logging tool 26 (block 142). A measurement M may be determined from the responses (block 144). The measurement M may be obtained by filtering one or more of the responses of the acoustic logging tool 26 and/or combining responses from multiple acoustic logging tools 26. It may be appreciated that different acoustic logging tools 26 may have different accuracies and characteristics; these differences may be considered in selecting the measurement M and/or other values (e.g., the measurement value of free pipe threshold Mfpt discussed below). Some of the differences between the measurements are shown below in Table 1:

| Cement Evaluation Measurement | Quantitative-Y Qualitative-N | High Azimuthal Resolution | Confidence in the Measurement |
|---|---|---|---|
| CBL | | | |
| - amplitude | Y | N | Uses calibration and affected by borehole conditions |
| - attenuation | Y | N | Compensated attenuation independent of borehole |
| -VDL | N | N | |
| Pulse Echo based Acoustic impedance | Y | Y | Model based and uses proper parameterization of borehole conditions |
| Flexural mode attenuation | Y | Y | Calibrated attenuation. Slight dependence of proper parameterization of borehole conditions |
| Third interface echo | | | |
| - TIE amplitude | Y | Y | Dependent on casing centralization and annul us standoff |
| - TIE annular acoustic velocity | Y | Y | Uses information on borehole size (caliper) |

The measurement can be any acoustic measurement of the attenuation of the acoustic wave propagation generated in the casing string. This measurement is desired to have linear dependency between and quality of the cement. These two properties of the measurement can be achieved by converting measurement value (for example using "Logarithm" for Cement Bond Log ("CBL")) or by looking at specific range of measurements where these properties are valid. For example, CBL measurement is not linear to quality of the cement, but CBL attenuation is (according to the laboratory tests); acoustic impedance measurement is linear; flexural attenuation is linear within low range of the measurements (liquids and light or contaminated cements). Measurements over evanescent point could be interpreted as good cement by combining flexural attenuation interpretation with acoustic impedance measurement.

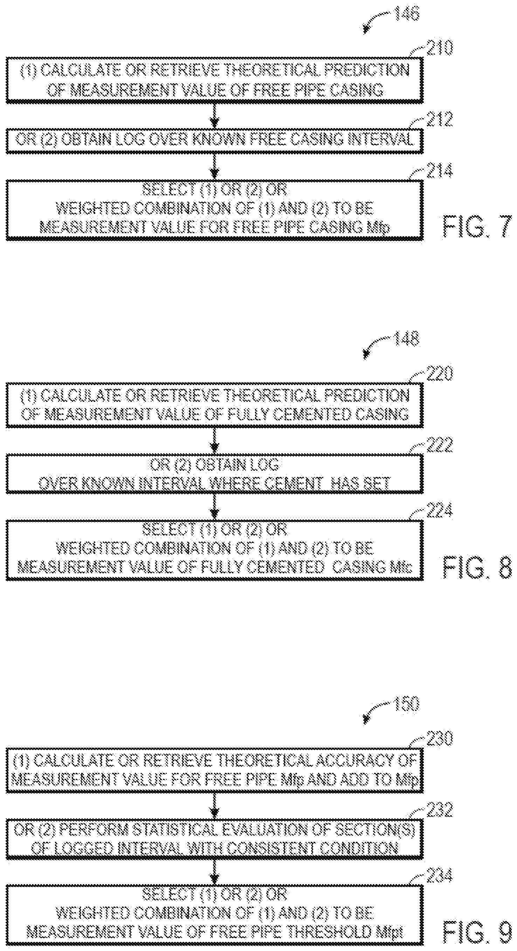

Having determined the measurement M, several variables may be determined using, for example, the data processing system 38. These include a measurement value for free pipe casing Mfp (block 146 and described further with reference to FIG. 7), a measurement value for fully cemented casing Mfc (block 148 and described further with reference to FIG. 8), a measurement value to serve as a free pipe threshold Mfpt (block 150 and discussed further with reference to FIG. 9), and a coverage percentage CP relating to a suitable amount of azimuthal cement 18 coverage to be considered fully azimuthally covered (block 151). Using these values, the data processing system 38 may calculate the Solids Presence Indicator (SPI), Solids Index (SI), Solids Azimuthal Coverage Index (SACI), and/or Azimuthal Coverage Indicator (ACI) (block 152).

**Solids Presence Indicator (SPI), Solids Index (SI), Solids Azimuthal Coverage Index (SACI), and/or Azimuthal Coverage Indicator (ACI)**

In one example, the data processing system 38 may determine the Solids Presence Indicator (SPI), Solids Index (SI), Solids Azimuthal Coverage Index (SACI), and/or Azimuthal Coverage Indicator (ACI) as follows:

M - measurement (any suitable acoustic cement evaluation measurement)
Mav - Azimuthally average measurement value
Mi - Each azimuthal measurement value (1<= $i$ <= N, where N is the number of azimuthal measurements)

Interpretation parameters:

Mfp - Measurement value for free pipe casing
Mfc - Measurement value for fully cemented casing
Mfpt - Threshold for measurement value, particularly solid / liquid threshold
CP - Coverage percentage, representing a percentage of azimuthal data read over threshold value

Solids Presence Indicator:

$$SPI = \begin{cases} 0, M \leq M_{fpt} \\ 1, M > M_{fpt} \end{cases}$$

Solids Index:

$$SI = \frac{\left(M - M_{fp}\right)}{\left(M_{fc} - M_{fp}\right)} \qquad M = M_{av}$$

for azimuthal measurement
Solids Azimuthal Coverage Index:

$$SACI = \frac{1}{N} \times \sum_{i=1}^{N} \begin{cases} 0, M_i \leq M_{fpt} \\ 1, M_i > M_{fpt} \end{cases}$$

Azimuthal Coverage Indicator:

$$ACI = \begin{cases} 0, SACI < CP \\ 1, SACI \geq CP \end{cases}$$

Interpretation or mean for these indicators and index are:

SPI - Solids Presence Indicator flags when the measurement is reading higher then threshold level of the free pipe response. It points out that measurement is indicating presence of solids behind the casing at specific depth.

SI - Solids Index is an analog of the Bond Index. It is defined as "0" for free casing and "1" for 100% cemented as expected casing. It indicates linear percentage if readings are between expected "0" and "1". It is well suited for measurements that have a linear response between free casing and 100% cemented casing, such as CBL attenuation (or Log of amplitude), acoustic impedance, or flexural attenuation when values of flexural attenuation remain below evanescence point.

SACI - Solid Azimuthal Coverage Index shows percentages of the azimuthal measurements at specific depth that are reading above predetermine threshold such as free pipe response. "0" can be interpreted as meaning that each azimuthal measurement is below the threshold, indicating free casing. "1" can be interpreted as meaning that each azimuthal measurement is above/past free casing threshold indicating that solids are covering azimuthally 100% of the casing.

ACI - Azimuthal coverage indicator is a flag. It flags "1" when CP percent of the azimuthal measurements read solids. With CP=100%, ACI flags when solids provide full azimuthal coverage.

A statistical approach can also be taken for light cements: for example, with CP set at 95%, ACI will flag when there are 95% of the azimuthal measurements read above the threshold. It should be carefully considered, however, that a narrow channel with a width smaller or around resolution of the sensor may be not flagged with this index, but rather just may be identified visually in some cases. Under these conditions, an interpretation becomes subjective. It also should be noted there are other statistical methods that may allow classifying "possibly solids" based on variation of the data.

These indicators may allow quick answers to questions that may arise during cement evaluation: the top of the cement can be linked with SPI; and hydraulic isolation can be associated with ACI.

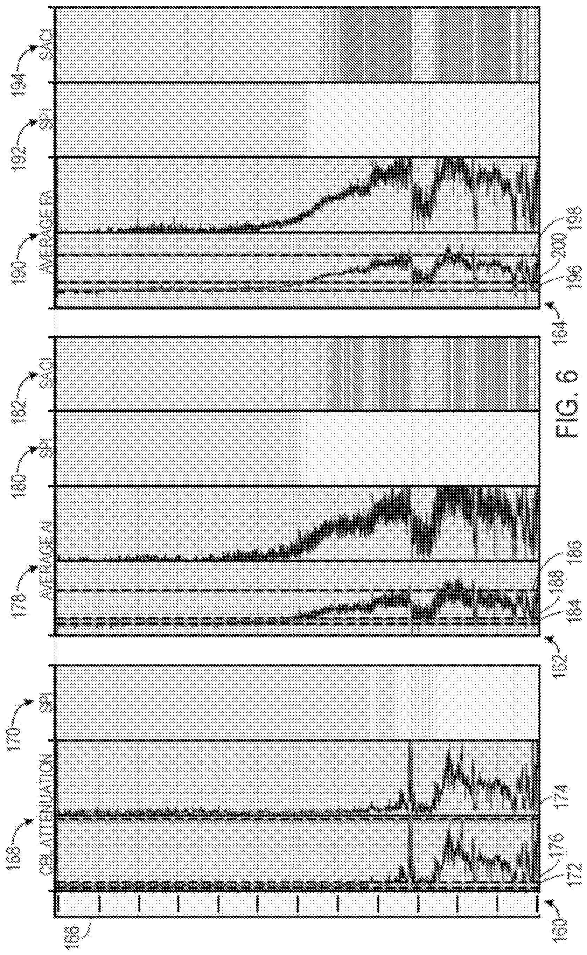

FIG. 6 provides an example of a well log that displays a Solids Presence Indicator (SPI) and/or a Solids Azimuthal Coverage Index (SACI). Specifically, FIG. 6 illustrates a Cement Bond Log (CBL) attenuation log 160, an Acoustic Impedance (AI) log 162, and a Flexural Attenuation (FA) log 164 accompanied by corresponding tracks of SPI and/or SACI. Each log 160, 162, and 164 show data obtained over a common depth interval 166.

Considering the well log 160, track 168 represents CBL attenuation and track 170 represents an associated Solids Presence Indicator (SPI). The SPI of track 170 is shown to be light when the cement 18 is indicated to be solid and dark when the cement 18 is indicated to be liquid (e.g., not present or not properly set as expected). The SPI of track 170 varies depending on the measurement shown in the track 168. Namely, a free pipe response Mfp (line 172) indicates that no cement 18 is present behind the casing 22 at that tool response, a fully cemented response Mfc (line 174) indicates that the cement 18 is fully present at that tool response, and a free pipe threshold Mfpt (line 176) indicates that the cement 18 is most likely present above that response. By moving the free pipe threshold Mfpt (line 176), the SPI may indicate more or less cement 18 coverage at various depths. As will be discussed below, however, the free pipe threshold Mfpt may be selected in an objective way with a calculable confidence.

The well logs 162 and 164 of FIG. 6 similarly indicate SPI and SACI. In these, SACI varies in darkness depending on the degree of azimuthal cement 18 coverage detected by the respective measurement.

FIG. 7 is a flowchart representing block 146 of FIG. 5. The flowchart of FIG. 7 shows that the measurement value of free pipe casing Mfp may be determined from a theoretical calculation of the measurement, an empirically collected log over a known free casing interval, or a combination of these (e.g., a weighted combination). In the example of FIG. 7, a theoretical prediction of the measurement value of the free pipe casing Mfp may be calculated (or a precalculated prediction may be retrieved from data storage) based on any suitable model of the selected measurement M that is theoretically expected in a free pipe zone (block 210). In this way, the indices and/or indicators discussed above may be determined from the measurement M without logging a known free pipe zone or without knowledge of a free pipe zone. Additionally or alternatively, an interval of a log of the measurement M for a known free pipe zone in the well may be obtained or retrieved from data storage (block 212). The measurement value of free pipe casing Mfp then may be selected as either one of these values or as some combination of these values (block 214). For example, the measurement value for free pipe casing Mfp may be selected to be a weighted average of the theoretical prediction of the measurement value M at a free pipe zone and the actual log data relating to a known free pipe zone.

FIG. 8 is a flowchart representing block 148 of FIG. 5. The flowchart of FIG. 8 shows that the measurement value of fully cemented pipe casing Mfc may be determined from a theoretical calculation of the measurement, an empirically collected log over a known fully cemented interval, or a combination of these (e.g., a weighted combination). In the example of FIG. 8, a theoretical prediction of the measurement value of the fully cemented casing Mfc may be calculated (or a precalculated prediction may be retrieved from data storage) based on any suitable model of the selected measurement M that is theoretically expected in a fully cemented zone (block 220). Using a theoretical prediction, the indices and/or indicators discussed above may be determined from the measurement M without logging a known fully cemented zone or without knowledge of a fully cemented zone. Additionally or alternatively, an interval of a log of the measurement M for a known fully cemented zone in the well may be obtained or retrieved from data storage (block 222). The measurement value of free fully cemented casing Mfc then may be selected as either one of these values or as some combination of these values (block 224). For example, the measurement value for fully cemented casing Mfc may be selected to be a weighted average of the theoretical prediction of the measurement value M at a zone of fully cemented casing and the actual log data relating to a known interval of fully cemented casing.

FIG. 9 is a flowchart representing block 150 of FIG. 5. The flowchart of FIG. 9 shows that the measurement value of the free pipe threshold Mfpt may be determined from a theoretical calculation of the measurement value, a statistical analysis of the sections of a logged interval with consistent conditions (e.g., therefore suggesting a specific fully cemented or fully free pipe condition), or a combination of these (e.g., a weighted combination). For instance, a theoretical prediction of the accuracy of the measurement value of the free pipe casing Mfp may be calculated (or a precalculated prediction may be retrieved) based on any suitable model (block 240). Additionally or alternatively, a statistical analysis may be performed regarding an accuracy of the measurement M in an interval of a log of the measurement M for a known free pipe zone in the well may be (block 242). The statistical analysis may provide a confidence value associated with the likelihood that a measurement beyond the threshold Mfpt shows a section of the casing 22 behind which the cement 18 is actually fully set. A value beyond a desired confidence may represent one possible value of the free pipe threshold Mfpt. The measurement value of free pipe threshold Mfpt then may be selected as either one of these values or as some combination of these values (block 244). For example, the measurement value for free pipe threshold Mfpt may be selected to be a weighted average of these values.

Interpretation of the M measurement may be possible when the Mfp, Mfc, and Mfpt values are clearly defined and understood. It should also be understood that the M measurement, as any physical measurement, may be subject to calibration and offset and may have certain precision, accuracy, and acquisition quality.

As described above, a measurement value for free pipe casing, Mfp, can be taken from theoretical estimate(s) and/or one or more logs over a know free casing interval. A measurement value for fully cemented casing, Mfc, can be estimated using theoretical estimate(s) and/or one or more logs over a known casing interval where cement set as expected. A measurement value for free pipe threshold, Mfpt, can be estimated using a theoretical accuracy of the measurement, for example Acoustic Impedance $_{drilling\ fluid}$ + 0.5MRayls and/or using a statistical assessment of the section of the logged interval with known consistent interval.

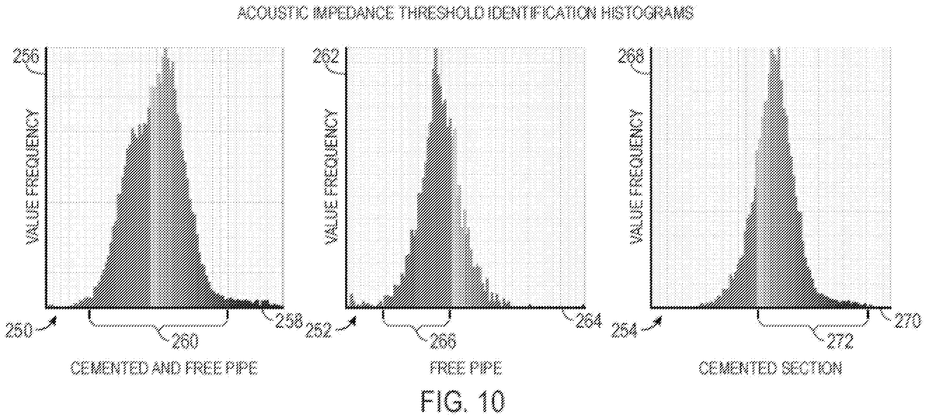

FIG. 10 shows histograms of Acoustic Impedance (AI) for which the statistical analysis may be carried out to determine Mfpt (e.g., as indicated in block 242 of FIG. 9). The distinctions between logged sections with consistent conditions may be used to ascertain a suitable Mfpt value. A histogram 250 represents values of AI for an interval of both fully cemented and free pipe, whereas a histogram 252 represents values of AI for an interval of free pipe and a histogram 254 represents values of AI for a fully cemented interval of the well.

In general, the histogram 252 is likely to represent mostly sections of free pipe and the histogram 254 is likely to represent a fully cemented section because they tend to cluster around specific values. This may be contrasted with the histogram 250, which therefore likely includes sections of both cemented and free pipe.

Looking specifically at the histogram 250, an AI value frequency (ordinate 256) is shown against the values of AI for a first interval of a well (abscissa 258). Here, the values are spread relatively widely (numeral 260) and thus, statistically, would not likely represent a specific condition of either fully cemented or free pipe, particularly as compared to the histograms 252 and 254. Indeed, by contrast, the histogram 252 shows an AI value frequency (ordinate 262) against the values of AI for a second interval of the well (abscissa 264) in which the values are clustered relatively closely together (numeral 266) around a first particular value. The histogram 254 shows an AI value frequency (ordinate 268) against the values of AI for a third interval of the well (abscissa 270) in which the values are clustered relatively closely together (numeral 272) around a second particular value. Because the second particular value of the histogram 254 and the first particular value of the histogram 252 are apart from one another, these values may indicate that the respective logging intervals associated with the histograms 252 and 254 represent intervals of different cement conditions (i.e., that one is more likely free pipe and one more likely fully cemented).

Considering the information represented by histograms such as 250, 252, and 254, the Mfpt value may be determined by selecting, for example, a value some statistical amount higher than the likely free pipe value. For instance, the Mfpt value may be selected to be one standard deviation, two standard deviations, three standard deviations, or more, as suitable, above the likely free pipe value. Depending on the statistical value of the Mfpt that is selected, a particular statistical confidence may be accordingly attributed. This allows for an object measure of confidence to support interpretations of the data 36 from the acoustic logging tool 26.

In some examples, certainty can be assigned to the interpretation using a threshold Mfpt that was picked based on statistical evaluation of the measurement of the known interval in the well. As can be seen in FIG. 10, the free casing interval data variance may resemble normal distribution. Applying a statistical analysis on the free casing interval allows calculate median, average and standard deviation of the measurement. In some embodiments, the threshold Mfpt can be picked as a midpoint between average measurement in free pipe and cemented section. In this case, there is more than 50% probability that data past threshold represent cement. Probability goes higher when measured values are getting past midpoint, closer to the cement values. Threshold can also be determined by using standard deviation of the measured values.

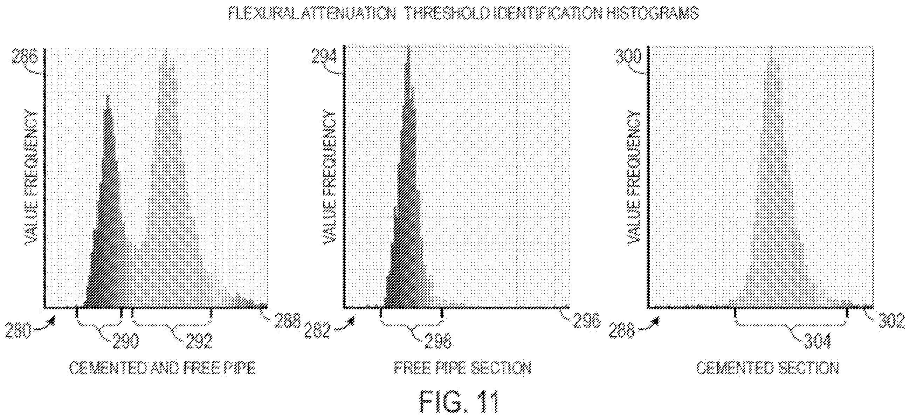

Similar histograms of Flexural Attenuation (FA) measurements appear in FIG. 11. These also may be used to determine Mfpt. Indeed, a histogram 280 represents measurements from both cemented and free pipe sections, while a histogram 282 represents FA measurements from a free pipe section and a histogram 284 represents FA measurements from a cemented section.

Looking specifically at the histogram 280, an FA value frequency (ordinate 286) is shown against the values of FA for a first interval of a well (abscissa 288). Here, the values form two distinct modal peaks (numerals 290 and 292) and thus, statistically, appear to relate to two distinct well conditions. That is, looking at the histogram 280, the range of values indicated by numeral 290 appear at first glance to relate to a free pipe zone, while the range of values indicated by numeral 292 appear to relate to a fully cemented zone. Indeed, the histogram 282 shows an FA value frequency (ordinate 294) against the values of FA for a second interval of the well (abscissa 296) in which the values are clustered relatively closely together (numeral 266) around the same value as the range indicated by numeral 290 of the histogram 280. This further strengthens the confidence that the range indicated by numeral 290 of the histogram 280 and the range indicated by the numeral 298 of the histogram 282 both relate to a common well condition. Here, that common well condition may be understood to be a free pipe zone because it is lower than the range of FA values indicated by numeral 292. This is further supported by the histogram 284, which shows an AI value frequency (ordinate 300) against the values of FA for a third interval of the well (abscissa 302) in which the values are clustered relatively closely together (numeral 304) around the same value as the range of FA values indicated by numeral 292.

Because the FA values are so distinct and accurate in this example, a statistically selected value of Mfpt may have a greater confidence value for a given range of values on the basis of such values. This may also be used to indicate that certain measurements may be more appropriate for certain situations. For example, in the example of FIGS. 10 and 11, FA measurement may provide a more likely accurate interpretation of whether the cement 18 has been properly installed and set and/or where the top of the cement is in the well. Moreover, in some examples, an interval of FA measurements that is statistically more likely to be free pipe may be used to identify values of other measurements (e.g., AI measurements) in that interval as likely pertaining to a free pipe zone. Similarly, an interval of FA measurements that is statistically more likely to be fully cemented may be used to identify values of other measurements (e.g., AI measurements) in that interval as likely pertaining to a fully cemented zone.

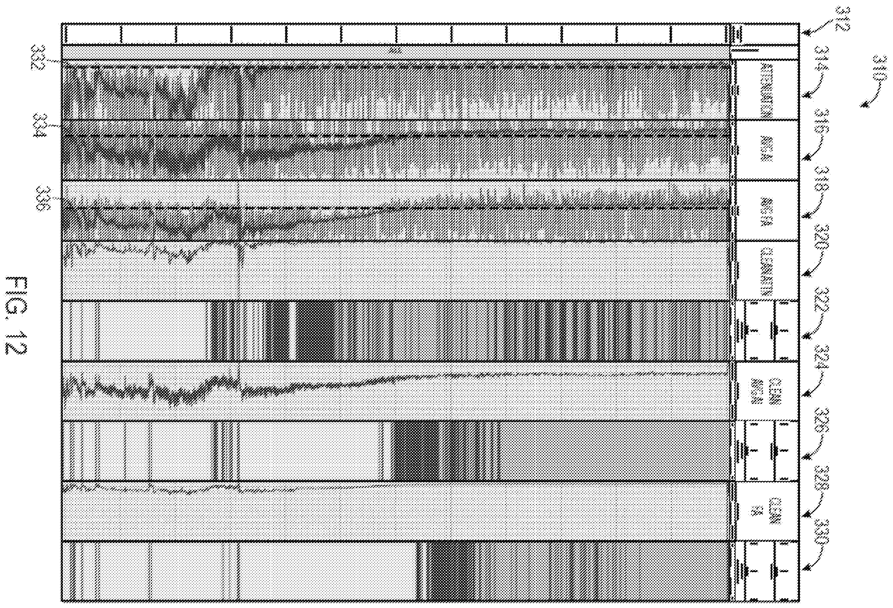

FIG. 12 provides an example of a log 310 that includes an SPI with varying degrees of confidence as obtained with various measurements. Here, the Mfpt value has been selected statistically to provide a relatively high degree of confidence (e.g., 95% from selecting Mfpt as two standard deviations above the Mfp value). The log 310 includes a depth track 312 that shows the depths of the interval of the well presented in the log 310. Tracks 314, 316, and 318 show raw measurements M of attenuation (CBL), average AI, and average FA, respectively. Track 320 shows a filtered ("clean") measurement of attenuation. Track 322 shows SPI calculated based on the clean CBL Attenuation measurement of track 320. Track 324 shows a filtered ("clean") measurement of average AI. Track 326 shows SPI calculated based on the clean measurement of AI of track 324. Track 328 shows a filtered ("clean") measurement of average FA. Track 330 shows SPI calculated based on the clean measurement of FA of track 328.

In one interpretation of the log 310, black areas of the SPI tracks 322, 326, and 328 indicate data outside the range of confidence for likely fully cemented or free pipe; gray areas indicate data within the range of confidence for likely free pipe; and white areas indicate data within the range of confidence for likely fully cemented pipe. These may be easily compared by a field engineer to the values of the measurements M on which the SPI tracks are based, as well as to one another.

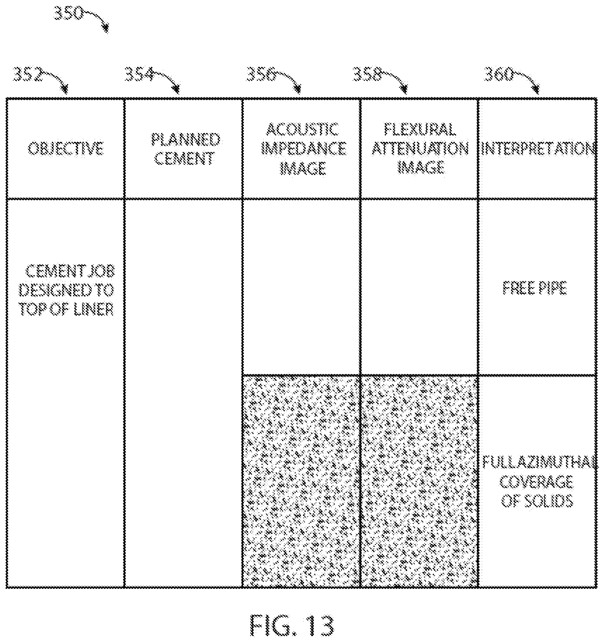

FIGS. 13-17 illustrate schematic drawings of well logs that relate to two real-world examples in which more objective measurements such as Solids Presence Indicator (SPI), Solids Index (SI), Solids Azimuthal Coverage Index (SACI), and/or Azimuthal Coverage Indicator (ACI) may be used to improve cement evaluation. Moreover, rather than relying just on cement evaluation measurements to identify potential cement installation challenges, additional information relating to the well may be included in a cement evaluation well log to more comprehensively explain the well.

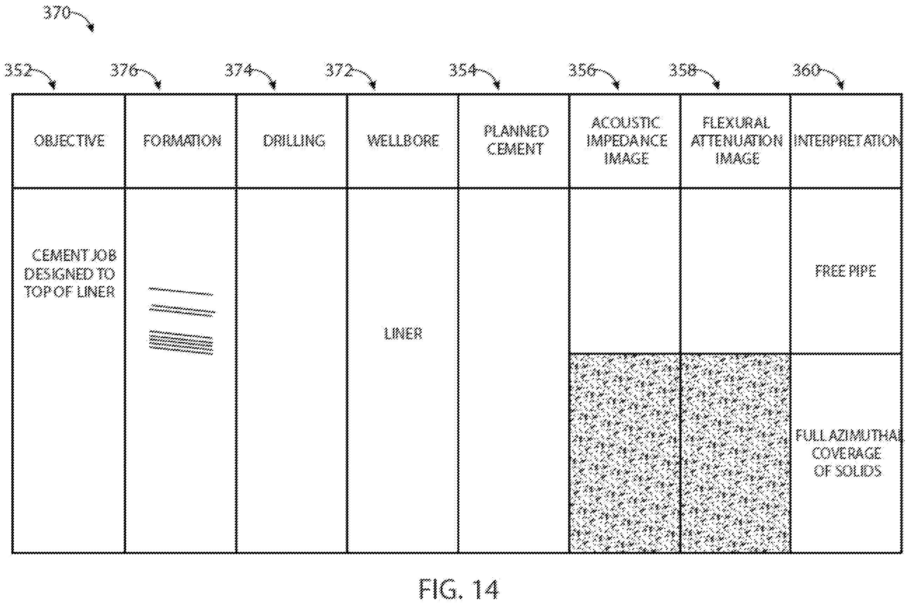

**First example.** FIGS. 13 and 14 are well logs that relate to a first of the two examples. In the first example, a top down liner squeeze was performed with the objective of cementing to the top of the liner. Successful cement placement was expected based on surface indicators. However, the cement evaluation log indicated the top of solids to be 600 feet deeper than expected, as can be seen in FIG. 13, which shows a log 350 of a well interval. Track 352 provides an objective of the job, track 354 shows planned cement location, track 356 shows an acoustic impedance (AI) measurement, track 358 shows a flexural attenuation (FA) measurement, and track 360 shows an interpretation of the data.

FIG. 14 shows a log 370 having additional information that may be used to provide insight into challenges that may arise in evaluating cement beyond what may be initially ascertainable solely using post-hoc cement evaluation measurements. In addition to the tracks 352, 354, 356, 358, and 360, the log 370 also includes a track 372 showing wellbore-related information, a track 374 showing drilling notes, and a track 376 showing formation characteristics (e.g., a Geological Image log). After reviewing the available well data in the log 370 of FIG. 14, which includes the Geological Image log, natural fractures were identified directly above the interpreted top of solids, as can be seen in FIG. 14.

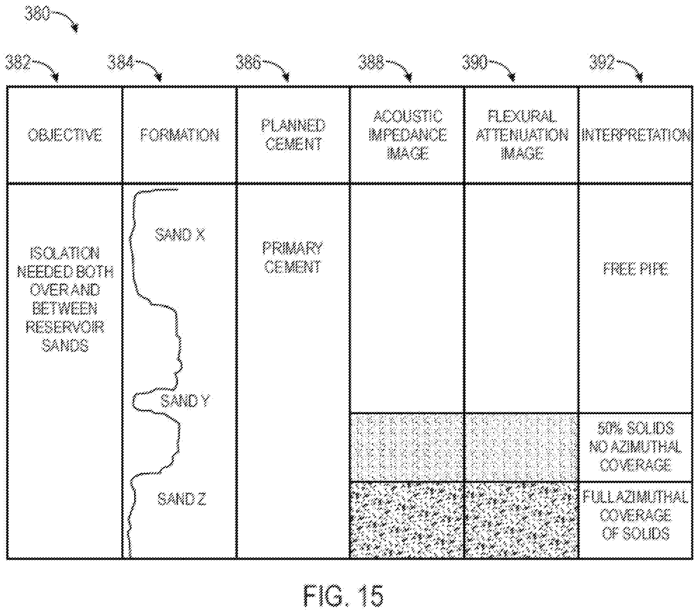

**Second example.** FIGS. 15-17 are well logs that relate to a second of the two examples. In the second example, an injector well was cemented with the objective of achieving isolation both over and between sands X, Y and Z. FIG. 15 represents an initial log 380 of this example that includes a track 382, listing the objectives of the job, a track 384 representing formation characteristics, a track 386 illustrating planned cement, a track 388 showing an acoustic impedance (AI) image, a track 390 showing a flexural attenuation (FA) image, and a track 392 showing an interpretation of the information presented in the other tracks. From the initial log 380 of FIG. 15, it may be seen that the cement evaluation log indicated the top of solids to be much deeper than expected, and the primary cementing objective was not achieved.

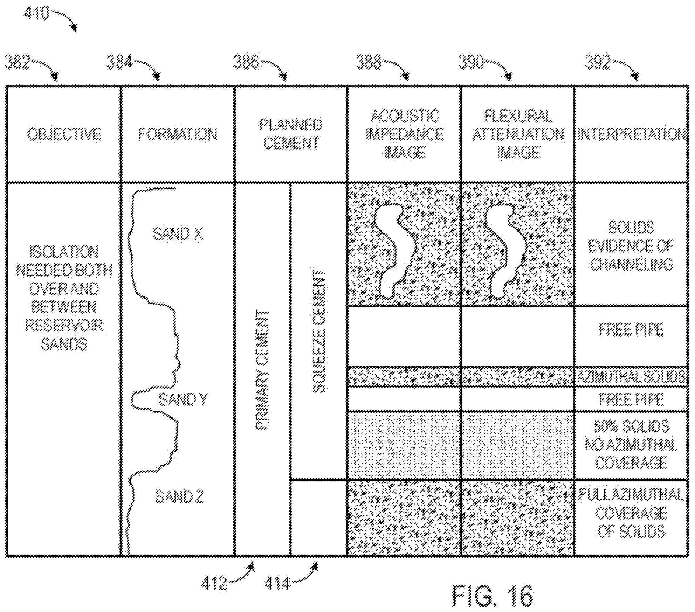

The effectiveness of immediate and future injectivity profile resulted in remedial action prior to well completion. The production casing was perforated to enable a remedial squeeze, after which the cement evaluation logs were run again. Additional solids were noted after the squeeze, over Sand X and a short interval between sands X and Y, as shown by a second log 410 of FIG. 16. As shown in the log 410, solids were not seen over Sand Y.

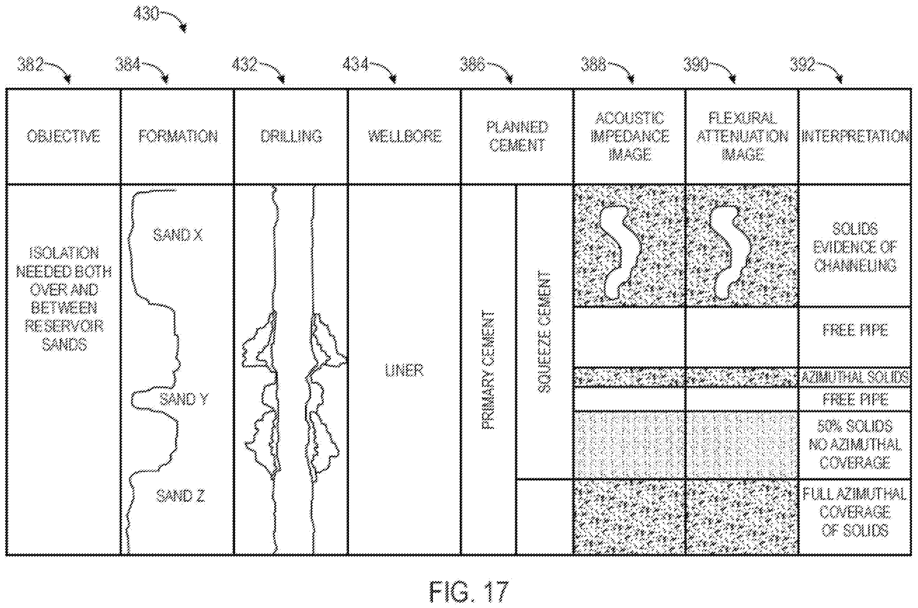

A log 430 of FIG. 17 includes additional information that may be used to provide insight into challenges that may arise in evaluating cement beyond what may be initially ascertainable solely using post-hoc cement evaluation measurements. Namely, the log 430 of FIG. 17 also includes a track 432 with additional drilling data and a track 434 indicating wellbore conditions. Since condition of the wellbore and pipe centralization is related to successful cement placement, reviewing the log 430 provided available well data. An LWD image log indicated Sand Y was situated between two ovalized shales where mud losses were evident, as seen in FIG. 17. This enabled a better completion of the cement job.

These two cases are also a demonstration of the value of data integration when evaluating cement placement. When completing an evaluation, it may be useful to compare job results versus job objectives and expectations. When the interpreted top of cement is not at the designed depth, and the question is asked, "where did the cement go?" it is difficult to explain what went wrong with limited data. What may be done is to review the cementing logs and the actual cementing job itself. However, integrating available petrophysical data, geological data, cementing information and cement evaluation logs can offer additional explanations to such questions.

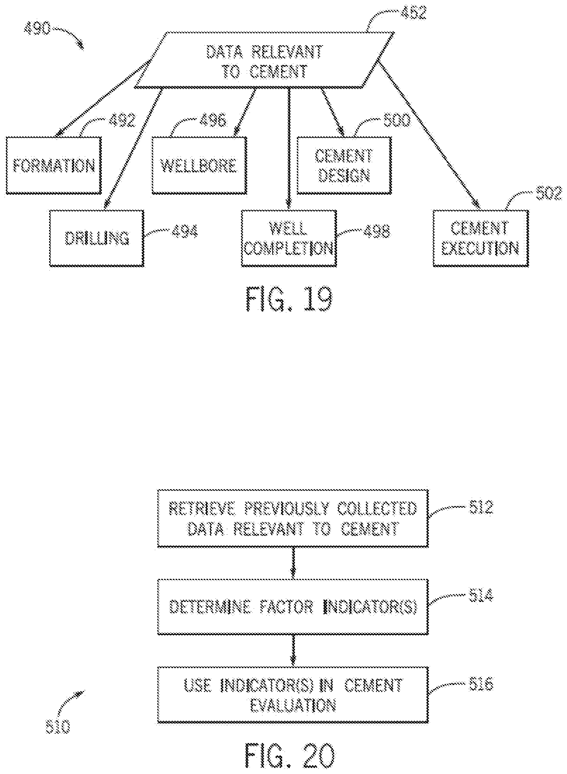

FIG. 18 is a flowchart 450 of such an integrated cement evaluation method. While a well is being drilled and completed, certain data 452 relevant to the future cement evaluation are stored (block 454) in a storage device (e.g., the storage 44 or a remote storage facility). In some embodiments, data 452 may be saved (block 454). In some embodiments, data 452 from certain stages of the drilling and completion of the well may be saved and stored (block 454). The flowchart of FIG. 18 is intended to be an example, and certain blocks shown in FIG. 18 may be performed in an alternative order as may be suitable. The type of data 452 that may be relevant to cement installation is discussed in greater detail below with reference to FIG. 19.

In the flowchart of FIG. 18, as a well is designed (block 456), at least some data 452 relevant to the cement may be ascertained and stored (block 454). As the well is drilled (block 458), which may involve logging-while-drilling (LWD) (block 460) and/or measurement-while-drilling (MWD) (block 462), at least some data 452 relevant to the cement may be ascertained and stored (block 454). Formation properties may be obtained (block 464) (e.g., via wireline or logging while drilling), and at least some data 452 relevant to the cement may be ascertained and stored (block 454). Well completions (block 466) may be conducted, which may include installing the casing 22 (block 468), designing the cement installation (block 470), executing the cement installation (block 472), and at least some data 452 relevant to the cement may be ascertained and stored (block 454).

The data 452 relevant to the cement that has been stored (block 454) may be used in an integrated cement evaluation (block 476). The integrated cement evaluation may involve obtaining the acoustic logs discussed above (block 478) and evaluating the other data relevant to the cement that was stored in the cement evaluation storage (block 480). The collection of this data may be presented in an integrated log (block 482), such as the integrated logs discussed above and below.

FIG. 19 is a schematic representation of various factors that may be established from the data 452 relevant to the cement. These may be as follows:

Formation information (block 492): Permeable/not permeable from lithology of rock (e.g., gamma-ray logging); Permeable water, oil, and/or gas, measured from resistivity and/or fluid samples; Salt presence, e.g., as determined by gamma-ray logging and/or elemental capture spectroscopy logging; Unstable formation, e.g., washouts, may be measured from calipers; Natural fractures; Pore pressure (e.g., predicted pore pressure); Fracture pressure (e.g., predicted and/or interpreted).

Drilling information (block 494): weight on bit (WOB), rate of penetration (ROP), rotations per minute (RPM) of the drill at various depths; mechanical practices, e.g., back reaming/ circulating bottom up (BU); issues, such as fluid losses; mud rheology, compressibility, compatibility, additives; induced fractures; Pore pressure.

Wellbore information (block 496): caliper data; oval borehole data, e.g., from azimuthal caliper with 2, 4, or 6 arms and/or LWD ultrasonic tools; deviation along wellbore, e.g., curved and/or flagged; wellbore geometry, e.g., tortuosity of the wellbore; over/under gauge hole diameter; and horizontal well, e.g., deviation flag.

Well Completion information (block 498): casing completion, e.g., from a well sketch; casing centralization, e.g., followed centralization design; and whether the well has been fractured.

Cement Design information (block 500): centralizer program available/used in cement design; caliper log available/used in cement design to estimate excess of the hole; volumetric expected cement slurry placement; modeled mud removal map; modeled fluid placement map; and expected Acoustic Impedance of the cement from UCA.

Cement Execution information (block 502): any deviation from the cement design; analysis of the cementing execution data (e.g., QC plugs did not bump, float valve did not hold, over displacement, density control, losses); playback of the cementing execution data; and events after cementing job and before cement evaluation, e.g., changing borehole fluid, measured wellbore pressure, temperature, hydraulic fracturing, drilling (e.g., damaging cement).

This may result as a very large volume of data. However, the information may be useful for truly comprehensive cement evaluation and thus may be assessed before/during interpretation of the cement placement. It should be appreciated that the specific usefulness of each point of data 452 as listed above may vary depending on other related points of data 452. The relationship of each of these points of data 452 to the evaluation of cement installation may be better understood through experimentation and experience, but may provide a substantial insight over purely post-hoc cement evaluation logs.

To manage and utilize this data 452, indicators for each major factor 492, 494, 496, 498, 500, and/or 502 may be established. As shown in flowchart 510 of FIG. 20, the factors 492, 494, 496, 498, 500, and/or 502 listed above, in some embodiments, may be used to create indicators that may flag particularly likely causes of cement failure or challenges. The flowchart 510 may begin when the relevant data 452 is collected (block 512). Thereafter, various indicators may be determined based on the factors 492, 494, 496, 498, 500, and/or 502 (block 514). For example, a formation factor 492 indicator may be determined based on one or more of the formation factors 492 indicated above; a drilling factor 494 indicator may be determined based on one or more of the drilling factors 494 indicated above; a wellbore factor 496 indicator may be determined based on one or more of the wellbore factors 496 indicated above; a well completion factor 498 indicator may be determined based on one or more of the well completion factors 498 indicated above; a cement design factor 500 indicator may be determined based on one or more of the cement design factors 500 indicated above; and/or a cement execution factor 502 indicator may be determined based on one or more of the cement execution factors 502 indicated above. The indicators may be determined using any of the data 452 relevant to the cement that provides a suggestion that the cement may be more likely than otherwise to fail given that data and/or using threshold determinations, as described above.

These indicators and/or the original data 452 relevant to cement that has been stored (block 454) may enable the ability to perform in-house analysis and interpretation by a subject matter expert and then present "raw" data with supported interpretation summary indicators, while also allowing simplified and quick assessment of the well integrity (WI) of the wellbore 16. The indicators may speed up the overall interpretation process and may bring numerical value to the quality of the each factor for well integrity. In addition, the indicators may assist interpretation for less experienced personnel.

FIG. 21 is a flowchart 520 providing one example of integrated cement evaluation. Specifically, the flowchart 520 may begin when a project is created (block 522) to collect and process the data 452 relevant to cement evaluation. When logging while drilling (LWD) data is available (decision block 524), the LWD channels may be collected (block 526) or, alternatively, open hole (OH) channels may be collected (block 530). A well integrity engineer or a process running on the data processing system 38 may review the interpretation of the well using these channels (block 530), which generally relate to the petrophysics of the well. For instance, the actions of block 530 may involve determining and/or reviewing indicators such as those discussed above.

At block 532, measurement-while-drilling (MWD) channels may be collected and added to the LWD and/or OH channels. An MWD engineer or a process running on the data processing system 38 may review the interpretation of the well using these channels (block 534), which generally relate to the characteristics of the well as drilled. For instance, the actions of block 534 may involve determining and/or reviewing indicators such as those discussed above. Among other things, the MWD data may indicate well deviation and/or characteristics of the well as drilled that may affect the integrity of cement that will be placed.

Having collected the LWD and/or OH channels and the MWD channels, at block 536, surface data (e.g., well drilling fluid properties, etc.) may be added and evaluated. An engineer or a process running on the data processing system 38 may review the interpretation of the well using this data (block 538). After evaluating the known information from drilling the well and certain surface data relating to the well, cement job data may also be added (block 540) and interpreted by an engineer or a process running on the data processing system 38 (block 542). In some embodiments, the cement job data 540 may itself have been developed at least partly based on the interpretation of block 538. When acoustic logs data is added (block 544), an integrated interpretation may take place using the data by an engineer or a process running on the data processing system 38 (block 546). From the interpretation of block 546, a top of the cement and azimuthal coverage determination may be defined (block 548) and indicated on the integrated layout presented to the client (block 550). The integrated layout may also be archived (block 552).

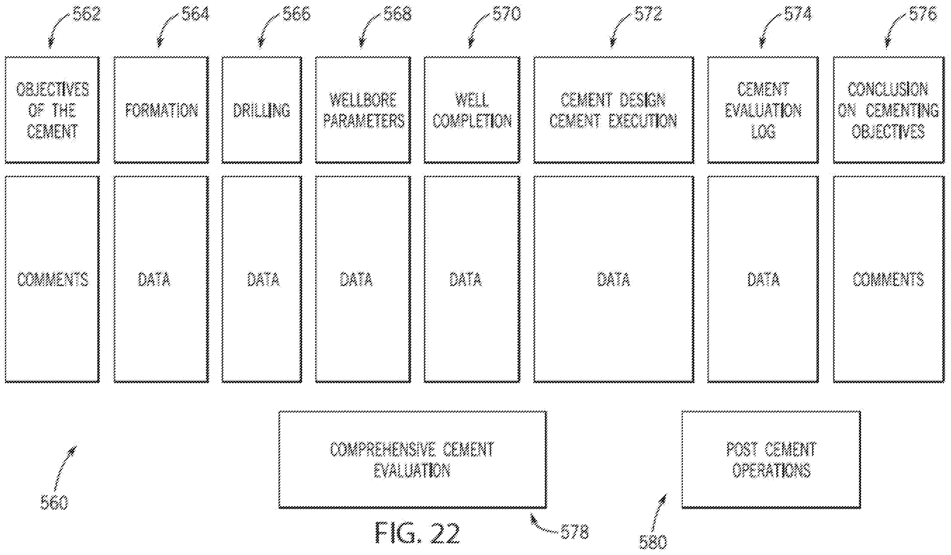

FIG. 22 illustrates a block diagram that includes log data that may be combined into an integrated cement evaluation log 560. Here, a track 562 includes objectives of the cement job, a track 564 includes formation-related data, a track 566 includes drilling-related data, a track 568 provides wellbore parameters, a track 570 provides well completion data, a track 572 provides cement design and execution data, a track 574 provides cement evaluation log data, and a track 576 provides comments on the cementing objectives in light of the data provided by the other tracks. Some of the tracks (e.g., tracks 562, 564, 566, 568, 570, and 572) may represent comprehensive cement evaluation 578 tracks. Some of the tracks (e.g., track 574) may represent post cement operations 580 tracks.

As it was mentioned earlier, the factors stated above may be useful for evaluation of the barrier. It may be a difficult task to combine this information together in a meaningful form. Indeed, the data relevant to the cement may be obtained in advance, rather than merely attempting to comb through or collect the data at the time of the cement evaluation. Having an integrated layout for the data relevant to the cement along with the acoustic logging data may allow in-time / pre-job preparation / planning, which may allow a substantially real-time decision process. Moreover, this data integration can be used for production planning, perforating interval decision, and future improvements. The data integration shown in FIG. 22 may also improve efficiency of communication between departments and common depth references may decrease confusion and mistakes that might otherwise occur. Moreover, the information may reflect relevance to zonal isolation and quality of the cement as generally represented in FIG. 22. The indicators and flags discussed above further may enable a quick assessment of the integrated cement evaluation interpretation.

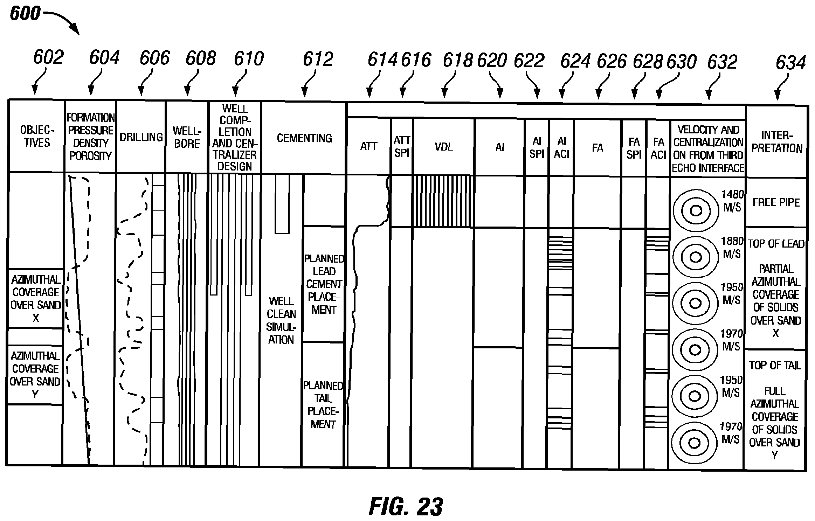

FIG. 23 is an example integrated well log 600 generated for integrated cement evaluation. The example well log of FIG. 23 generally comports with the block diagram of FIG. 22. Here, a track 602 includes objectives of the cement job, a track 604 includes formation-related data, a track 606 includes drilling-related data, a track 608 provides wellbore parameters, a track 610 provides well completion data, a track 612 provides cement design and execution data. Tracks 614, 616, 618, 620, 622, 624, 626, 628, 630, and 632 provide cement evaluation log data. In the example of FIG. 23, track 614 represents attenuation (CBL), track 616 represents SPI based on attenuation, track 618 represents variable density log, track 620 represents acoustic impedance (AI), track 622 represents SPI based on AI, track 624 represents ACI based on AI, track 626 represent flexural attenuation (FA), track 628 represents SPI based on FA, and track 630 represents ACI based on FA. A track 634 provides comments on the cementing objectives in light of the data provided by the other tracks.

It may be appreciated that specific data flows and data integration in one place may benefit from clear workflows. By using developed workflows to collect and integrate in one place the data used for interpretation (e.g., as shown in FIG. 18), this disparate and otherwise uncoordinated data may be combined in the integrated cement evaluation. The integrated cement evaluation discussed in this disclosure may allow the practice of more robust or trustworthy interpretation. Indeed, it may not just allow the identification of cement barrier problems, but also may help highlight the possible cause and explanation of such problems. Finally, as data is accumulated over various well cycles, the assessment of the potential integrity of the each well can be done even during beginning of the well cycle. Certainty may further continue to improve as additional integrated well logging takes place.

Further, given the high cost of delay (e.g., in terms of rig rental costs and lost production), obtaining a determination that the cement has been properly installed as early as possible may save substantial time, energy, and cost. To provide one example, by following the process of FIG. 21-considering the integrated data 452 relevant to cement as it is collected-may allow a determination that the acoustic logs may be run earlier than a most conservative estimate. For instance, when the formation-related data, drilling-related data, and wellbore parameters indicate that cement is likely to set properly (e.g., there are no apparent channels for the cement to exit through), the acoustic logs may be run earlier because the cement is likely to set more quickly. This may confirm that the cement has been properly installed sooner, rather than later, to enable the well to be completed and ready for production sooner. In some cases, this may speed the development of the well by 42-72 hours or more.

In addition, the coordinated data integration may further offer guidance concerning the appropriate time and location of subsequent well operations. Such well operations may include remedial cementing, perforating, matrix acidizing, fracture acidizing, hydraulic fracturing, sand control or well abandonment or combinations thereof. Furthermore, such guidance may be received with or without calculating the indices SPI, SI, SACI or ACI.

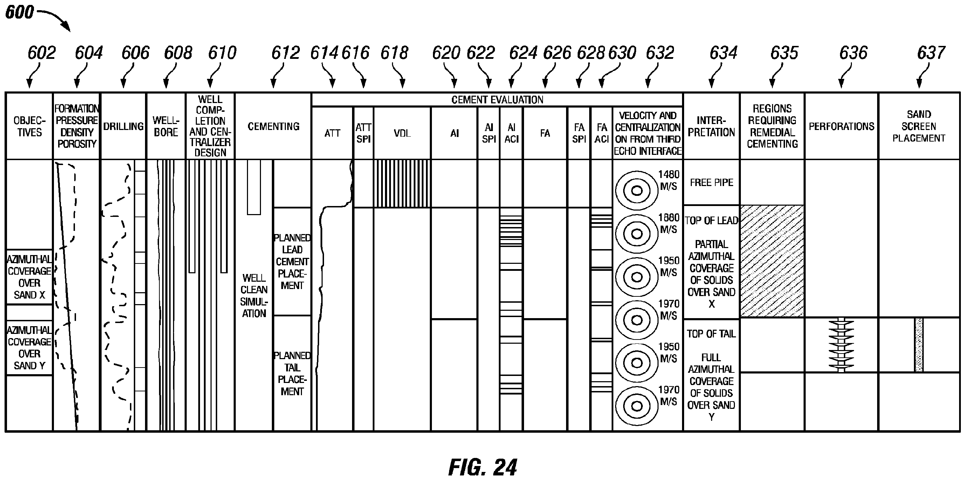

FIG. 24 presents an example based on the information provided by the integrated well log 600 of FIG. 23. One may surmise from the log 600 that the objective is to produce from Sand Y, because the top of the tail cement slurry covers the Sand Y interval (Track 634). Track 634 also indicates that the other sand, Sand X, is covered by a lead slurry that has provided only partial azimuthal coverage. As a result, there may be insufficient strength to withstand the rigors of perforating, stimulation, etc. And, to ensure there is sufficient zonal isolation across Sand X to prevent annular contamination, remedial cementing is recommended as indicated by Track 635. Track 636 indicates that perforating should be performed across Sand Y; however, for sand control purposes, sand screens should be placed across the Sand Y interval as well (Track 637). The well may be produced conventionally or a frac-and-pack treatment may be performed.

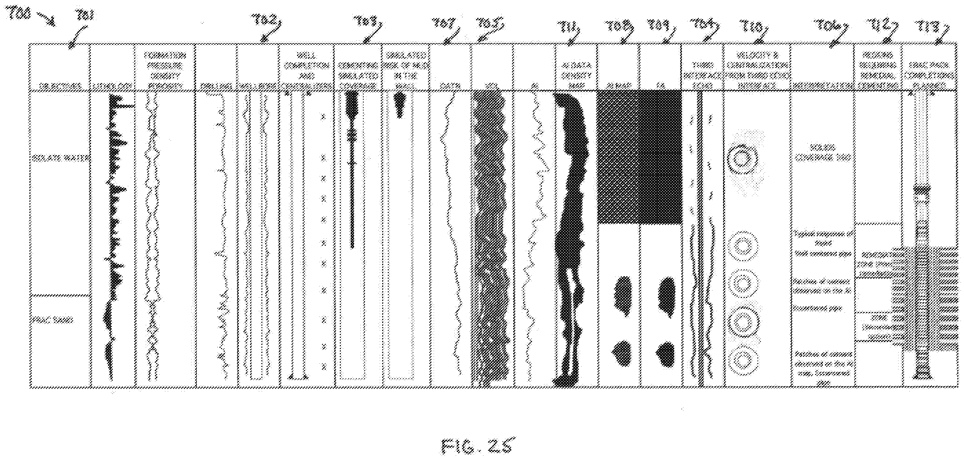

In another example (FIG. 25), the integrated well log 700 was used to provide an integrated cement evaluation after a cement job where the operational results led to questions concerning the cement sheath's ability to allow further well completions to proceed.

The job objectives were to isolate water sands to produce from sands 701. The hole was drilled in one run and reached total depth. Drilling operations data showed a hole in caliper with no deviations from drilling practices 702. The liner was run in hole with no losses, a cement job was executed, no losses were reported during the entire job execution and there was no clear indication of bumping the top plug. When the execution was compared to the "CEMENTING SIMULATED COVERAGE" map 703, the results indicated cement at the shoe of the string could be contaminated.

An Isolation Scanner (IBC) 704 and Sonic Scanner (CBL-VDL) log 705 were recorded. The top of cement was interpreted as shown 706. The acoustic impedance from USIT showed an increase in readings and the discriminated CBL attenuation (DATN) 707 also shows a jump in the sonic response at this depth. The log shows good cement from top of the liner to almost the top of the sands with high acoustic impedance values 708 and low flexural attenuation 709 which correlates with high density solids behind the casing. From this depth the discriminated CBL readings gradually decreased, suggesting the presence of contaminated cement in the lower part of the section.

Advanced interpretation using computed "VELOCITY & CENTRALIZATION FROM THIRD ECHO INTERFACE" 710 and also " DATA DENSITY MAP" 711 were computed to identify areas where remedial operations could allow the operator to complete the well as planned.

Using the calculated velocities it was possible to clearly identify the depths where the log shows poor bonding and contaminated cement from the shoe due to the over-displacement of fluids. The reflection at the third-interface-echo suggest that pipe is not centered in the annulus creating and narrow side with lower annular velocity leaving patches of cement as observed on the acoustic impedance map.

Two areas where the most centered pipe were observed with third-interface-echo values show high contrast between formation and material in the annulus, meaning that acoustic impedance values are lower that the annulus material. This was interpreted as a response of liquid behind the pipe.

The log information led to a recommendation that remedial operations (e.g., squeeze cementing) should be considered in areas that were well centralized 712, yet there was an absence of solids behind the casing. This strategy would maximize the probability of achieving complete cement placement around the casing and establishing zonal isolation, thereby allowing well completion operations (in this case, a frac-and-pack 713) to proceed.

Embodiments of the present disclosure may also relate to systems for integrating data from a well development operation. A system may integrate data from one or more phases of a well development operation (e.g., drilling, cementing and/or cement evaluation) to provide an integrated data package, which may be used, for example, when planning completion and stimulation of the well. For example, an integrated data package may be used for completion and stimulation planning to determine whether or not to modify the completion plan based on cementing quality and/or coverage and/or an integrated data package may be used for completion planning in other future wells (e.g., for an offset well). A feedback loop may be used to optimize and confirm data delivered in an integrated data package.

According to embodiments of the present disclosure, a system may include a data repository for storing data from a well development operation (e.g., drilling data, cement data, and/or cementing evaluation data from a borehole) and a computer processor. The computer processor may include instructions for providing different kinds of data in a common format as a function of depth along the borehole. For example, a computer processor may include instructions capable of providing drilling data, cement data, and cementing evaluation data in a common format and corresponding to a depth along the borehole from which the drilling data, the cement data, and the cementing evaluation data were collected. The computer processor may further include instructions capable of mapping the data into a data map of the borehole. For example, a computer processor may include instructions for mapping drilling data, cement data, and cementing evaluation data from a borehole that has been provided in a common format as a function of depth along the borehole into a data map of the borehole, where the data map of the borehole maps the collected data along the depth of the borehole.

Data from a well development operation (e.g., drilling data, cement data and/or cementing evaluation data) may be collected from a simulation of one or more phases of the well development operation, from theoretical calculations, and/or from measurements taken from a real formation and/or borehole using one or more measurement tools (e.g., logging devices, sensors, calipers). A computer processor in a system according to embodiments of the present disclosure may include instructions for comparing data from a simulation of one or more phases in a well development operation with real measured data from performing the one or more phases in the well development operation. Further, data collected in real-time or lag-time may be compared with predicted data of one or more phases in a well development operation, such as a drilling phase or cementing phase. In this manner, a feedback loop may be provided by confirming and/or updating predicted and/or simulated data to increase accuracy in a final integrated data package.

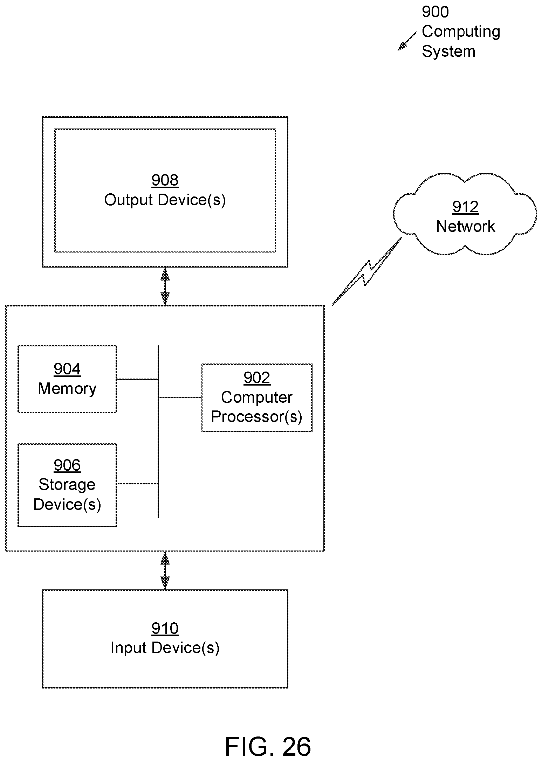

FIG. 26 shows an example of a computing system according to embodiments of the present disclosure. Any combination of mobile, desktop, server, embedded, or other types of hardware may be used. For example, as shown in FIG. 26, a computing system (900) may include one or more computer processor(s) (902), associated memory (904) (e.g., random access memory (RAM), cache memory, flash memory, *etc.*), one or more storage device(s) (906) (*e.g.,* a hard disk, an optical drive such as a compact disk (CD) drive or digital versatile disk (DVD) drive, a flash memory stick, *etc.*), and numerous other elements and functionalities. The computer processor(s) (902) may be an integrated circuit for processing instructions. For example, the computer processor(s) may be one or more cores, or micro-cores of a processor. The computing system (900) may also include one or more input device(s) (910), such as a touchscreen, keyboard, mouse, microphone, touchpad, electronic pen, or any other type of input device. Further, the computing system (900) may include one or more output device(s) (908), such as a screen (*e.g.,* a liquid crystal display (LCD), a plasma display, touchscreen, cathode ray tube (CRT) monitor, projector, or other display device), a printer, external storage, or any other output device. One or more of the output device(s) may be the same or different from the input device(s). The computing system (900) may be connected to a network (912) (*e.g.,* a local area network (LAN), a wide area network (WAN) such as the Internet, mobile network, or any other type of network) via a network interface connection (not shown). The input and output device(s) may be locally or remotely (e.g., via the network (912)) connected to the computer processor(s) (902), memory (904), and storage device(s) (906). Many different types of computing systems exist, and the aforementioned input and output device(s) may take other forms.

Software instructions in the form of computer readable program code to perform embodiments of the disclosure may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that when executed by a processor(s), is configured to perform embodiments of the disclosure. For example, the processor(s) (902) may carry out instructions to map one or more types of data for a well development operation (e.g., drilling data, cement data and/or cementing evaluation data) formatted into a common format as a function of depth along a borehole into a data map of the borehole. The data map may be displayed on the output device(s) (908). Examples of a data map, mapping data in a common format as a function of depth along a borehole, are shown, for example, in FIGS. 23 and 24. However, other data maps may be generated and displayed, for example, data maps showing different combinations of collected data along a depth of a borehole.

In one or more embodiments a data repository may be used to store data related to one or more phases of a well development operation, e.g., drilling and/or cementing. The data repository may be any type of storage unit and/or device (e.g., a file system, database, collection of tables, or any other storage mechanism) for storing data. Further, the data repository may include multiple different storage units and/or devices. The multiple different storage units and/or devices may or may not be of the same type or located at the same physical site.

Further, one or more elements of the aforementioned computing system (900) may be located at a remote location and connected to the other elements over a network (912). Further, embodiments of the invention may be implemented on a distributed system having a plurality of nodes, where each portion of the invention may be located on a different node within the distributed system. In one embodiment of the invention, the node corresponds to a distinct computing device. Alternatively, the node may correspond to a computer processor with associated physical memory. The node may alternatively correspond to a computer processor or micro-core of a computer processor with shared memory and/or resources.

## Claims

1. A method, comprising:

   collecting (810) data for a borehole, comprising drilling data, cementing data and cementing evaluation data, wherein the collected data comprises simulated data from one or more simulations of the borehole and measured data from the borehole;
   designing an integrated wellbore isolation plan (811) based on the collected data for the borehole, the integrated wellbore isolation plan comprising a drilling plan (812) and a cementing plan (813) for the borehole;
   mapping (816) the collected data comprising the drilling data, cementing data and cementing evaluation data onto a data map of the borehole along a depth of the borehole from which the collected data was collected, wherein the collected data is mapped as a function of depth along the borehole;
   setting zonal isolation parameters (815) for the borehole based on the integrated wellbore isolation plan;
   drilling (827) at least a portion of the borehole according to the drilling plan (812);
   monitoring (818) borehole conditions during drilling the borehole, such as temperature, pressure, fluid type or fluid flowrate;
   making a comparison between the borehole conditions and the drilling plan and determining (829) whether the zonal isolation parameters are achievable based on the borehole conditions;
   modifying the drilling plan based on real time measurements of the borehole conditions during the drilling when the zonal isolation parameters are determined not to be achievable based on the borehole conditions;
   cementing (833) at least a portion of the borehole according to the cementing plan;
   simulating the cementing plan prior to cementing to determine if the zonal isolation parameters are achievable;

monitoring the cementing in real time (818);
providing a real-time comparison between the monitored cementing and the simulated cementing plan; and
modifying the cementing plan (813) when the zonal isolation parameters are determined (829) to not be achievable.

2. The method of claim 1, further comprising:

building a mechanical earth model of a formation; and
selecting placement of the borehole through the formation based on geomechanics of the formation modeled in the mechanical earth model;
wherein the drilling plan (812) comprises the placement of the borehole.

3. The method of claim 2, further comprising:

collecting (810) the data from the formation; and
simulating a preliminary borehole design extending through the formation,
wherein placement of the borehole is selected based on simulation results from the simulating.

4. The method of claim 1, wherein the integrated wellbore isolation plan further comprises a cementing evaluation plan, the method further comprising:
simulating cement placement along the borehole to determine when to perform the cementing evaluation plan (814).

5. The method of claim 4, further comprising providing a dynamic fluid placement simulator to conduct the simulating, wherein the dynamic fluid placement simulator is constructed based on previously collected real cementing data.


**Patentansprüche**

1. Verfahren, umfassend:

Sammeln (810) von Daten für ein Bohrloch, umfassend Bohrdaten, Zementierungsdaten und Zementierungsbewertungsdaten, wobei die gesammelten Daten simulierte Daten aus einer oder mehreren Simulationen des Bohrlochs und gemessene Daten aus dem Bohrloch umfassen;
Entwerfen eines integrierten Bohrlochisolationsplans (811) basierend auf den gesammelten Daten für das Bohrloch, wobei der integrierte Bohrlochisolationsplan einen Bohrplan (812) und einen Zementierungsplan (813) für das Bohrloch umfasst;
Mappen (816) der die Bohrdaten, Zementierungsdaten und Zementierungsbewertungsdaten umfassenden gesammelten Daten auf eine Daten-Map des Bohrlochs entlang einer Tiefe des Bohrlochs, aus welcher die gesammelten Daten gesammelt wurden, wobei die gesammelten Daten in Abhängigkeit von der Tiefe entlang des Bohrlochs gemappt werden;
Festlegen von Zonenisolationsparametern (815) für das Bohrloch basierend auf dem integrierten Bohrlochisolationsplan;
Erbohren (827) wenigstens eines Abschnitts des Bohrlochs gemäß dem Bohrplan (812);
Überwachen (818) von Bohrlochbedingungen während des Erbohrens des Bohrlochs, wie Temperatur, Druck, Fluidtyp oder Fluidfließgeschwindigkeit;
Aufstellen eines Vergleichs zwischen den Bohrlochbedingungen und dem Bohrplan, und Bestimmen (829), ob die Zonenisolationsparameter erzielbar sind, basierend auf den Bohrlochbedingungen;
Modifizieren des Bohrplans basierend auf Echtzeitmessungen der Bohrlochbedingungen während des Bohrens, wenn bestimmt wird, dass die Zonenisolationsparameter nicht erzielbar sind, basierend auf den Bohrlochbedingungen;
Zementieren (833) wenigstens eines Abschnitts des Bohrlochs gemäß dem Zementierungsplan;
Simulieren des Zementierungsplans vor dem Zementieren, um zu bestimmen, ob die Zonenisolationsparameter erzielbar sind;
Überwachen des Zementierens in Echtzeit (818);
Bereitstellen eines Echtzeitvergleichs zwischen der überwachten Zementierung und dem simulierten Zementierungsplan; und
Modifizieren des Zementierungsplans (813), wenn bestimmt (829) wird, dass die Zonenisolationsparameter nicht erzielbar sind.

**2.** Verfahren nach Anspruch 1, ferner umfassend:

Erstellen eines mechanischen Erdmodells einer Formation; und
Wählen der Platzierung des Bohrlochs durch die Formation basierend auf der Geomechanik der im mechanischen Erdmodell modellierten Formation;
wobei der Bohrplan (812) die Platzierung des Bohrlochs umfasst.

**3.** Verfahren nach Anspruch 2, ferner umfassend:

Sammeln (810) der Daten aus der Formation; und
Simulieren einer sich durch die Formation erstreckenden vorläufigen Bohrlochgestaltung,
wobei die Platzierung des Bohrlochs basierend auf Simulationsergebnissen aus dem Simulieren gewählt wird.

**4.** Verfahren nach Anspruch 1, wobei der integrierte Bohrlochisolationsplan ferner einen Zementierungsbewertungsplan umfasst, wobei das Verfahren ferner umfasst:
Simulieren der Zementplatzierung entlang des Bohrlochs, um zu bestimmen, wann der Zementierungsbewertungsplan (814) durchgeführt werden soll.

**5.** Verfahren nach Anspruch 4, ferner umfassend ein Bereitstellen eines dynamischen Fluidplatzierungssimulators, um das Simulieren vorzunehmen, wobei der dynamische Fluidplatzierungssimulator basierend auf zuvor gesammelten realen Zementierungsdaten erstellt wird.

**Revendications**

**1.** Procédé, comprenant :

la collecte (810) de données pour un trou de forage, comprenant des données de forage, des données de cimentation et des données d'évaluation de cimentation, dans lequel les données collectées comprennent des données simulées à partir d'une ou plusieurs simulations du trou de forage et des données mesurées à partir du trou de forage ;
la conception d'un plan intégré d'isolation de puits de forage (811) sur la base des données collectées pour le trou de forage, le plan intégré d'isolation de puits de forage comprenant un plan de forage (812) et un plan de cimentation (813) pour le trou de forage ;
la cartographie (816) des données collectées comprenant les données de forage, les données de cimentation et les données d'évaluation de cimentation sur une carte de données du trou de forage le long d'une profondeur du trou de forage à partir duquel les données collectées ont été collectées, dans lequel les données collectées sont cartographiées en fonction de la profondeur le long du trou de forage ;
l'établissement des paramètres d'isolation zonale (815) pour le trou de forage sur la base du plan intégré d'isolation de puits de forage ;
le forage (827) d'au moins une partie du trou de forage selon le plan de forage (812) ;
la surveillance (818) des conditions du trou de forage pendant le forage du trou de forage, telles que la température, la pression, le type de fluides ou le débit du fluide ;
la réalisation d'une comparaison entre les conditions du trou de forage et le plan de forage et la détermination (829) si les paramètres d'isolation zonale sont atteignables sur la base des conditions du trou de forage ;
la modification du plan de forage sur la base de mesures en temps réel des conditions du trou de forage pendant le forage lorsque les paramètres d'isolation zonale sont déterminés comme n'étant pas atteignables sur la base des conditions du trou de forage ;
la cimentation (833) d'au moins une partie du trou de forage selon le plan de cimentation ;
la simulation du plan de cimentation avant la cimentation pour déterminer si les paramètres d'isolation zonale sont atteignables ;
la surveillance de la cimentation en temps réel (818) ;
la fourniture d'une comparaison en temps réel entre la cimentation surveillée et le plan de cimentation simulé ; et
la modification du plan de cimentation (813) lorsque les paramètres d'isolation zonale sont déterminés (829) comme n'étant pas atteignables.

**2.** Procédé selon la revendication 1, comprenant en outre :

la construction d'un modèle terrestre mécanique d'une formation ; et

la sélection du placement du trou de forage sur toute l'étendue de la formation sur la base de la géomécanique de la formation modélisée dans le modèle terrestre mécanique ;

dans lequel le plan de forage (812) comprend le placement du trou de forage.

3. Procédé selon la revendication 2, comprenant en outre :

la collecte (810) des données provenant de la formation ; et

la simulation d'une conception préliminaire de trou de forage s'étendant sur toute l'étendue de la formation, dans lequel le placement du trou de forage est sélectionné sur la base des résultats de la simulation à partir de la simulation.

4. Procédé selon la revendication 1, dans lequel le plan intégré d'isolation de puits de forage comprend en outre un plan d'évaluation de la cimentation, le procédé comprenant en outre :

la simulation du placement de ciment le long du trou de forage pour déterminer le moment de réaliser le plan d'évaluation de la cimentation (814).

5. Procédé selon la revendication 4, comprenant en outre la fourniture d'un simulateur de placement de fluide dynamique pour effectuer la simulation, dans lequel le simulateur de placement de fluide dynamique est construit sur la base de données de cimentation réelles collectées préalablement.

FIG. 1

FIG. 2

CEMENT EVALUATION WORKFLOW

**(1) AGREE ON JOB OBJECTIVES WITH CLIENT** — 72

**(2) ON COMPLETION OF DATA GATHERING** — 74
NOTE PARTICULAR ZONES OF INTEREST TO CUSTOMER
NOTE EXPECTED PROBLEM ZONES FROM BOTH DRILLING REPORT AND CEMENT DESIGN
NOTE EXPECTED TOP OF CEMENT AND CEMENT TYPE CHANGES FROM CEMENT DESIGN
RECORD EXPECTED RESPONSE OF THE LOGGING FLUID,
CEMENT SLURRIES AND FULLY SET CEMENT AND FREE PIPE

— 70

**(3) CEMENT VALUATION LOG ACQUISITION** — 76

**LOG QUALITY CONTROL DATA REAL TIME PASSED?** — 78

NO → **CEMENT EVALUATION PROCESS INCOMPLETE OR CE CONFIDENCE DECREASED** — 80

**(4) PROVISIONAL RESULTS ARE DELIVERED TO CUSTOMER IF NEEDED** — 82

**WELL DATA AVAILABLE** — 84 — NO

**CEMENT JOB DATA AVAILABLE?** — 86 — NO

**LQC CHECKS:** — 88
TOOL CENTRALIZATION IS WITHIN TOLERANCE — 90
PROCESSING ERRORS/FLAGS CAN BE EXPLAINED
PIPE READING ARE CLOSE TO NOMINAL
WINDOW IS SET CORRECTLY TO ENSURE FIRST ECHO IS CAPTURED
ZMUD PICKED BASED ON AVAILABLE DATA AND LOG RESPONSE
ONE OR MORE MEASUREMENTS ARE INTERPRETED: — 92
CBL – AMPLITUDE/ATTENUATION
VDL – CASING AND FORMATION ARRIVALS
ACOUSTIC IMPEDANCE
FLEXURAL ATTENUATION
THIRD ECHO INTERFACE
SOLIDS PRESENCE INDEX AND AZIMUTHAL COVERAGE INDICATOR — 94
CALCULATED BASED ON MEASUREMENTS
AND COMPARED TO GIVE A ZONE-BY-ZONE INTERPRETATION E.G. — 96
FREE PIPE RESPONSE
LIQUID FILLED ANNULUS
CHANNELING NOTED
CONTAMINATED CEMENT
ADDITIONAL SOLIDS WERE SEEN AFTER THE SQUEEZE OPERATION
360 DEGREE AZIMUTHAL ISOLATING NOTED

**(5) DELIVER/DISCUSS INTERPRETATION REPORT WITH CLIENT INCLUDING SUGGESTED AND/OR APPLICABLE NEW TECHNOLOGY** — 98

**(6) CEMENT EVALUATION PROCESS COMPLETED DATA STORED IN SYSTEM** — 100

FIG. 3

EP 3 259 441 B1

28

THRESHOLD

122
124
126

120
ACOUSTIC TOOL RESPONSE

128

THRESHOLD

FULLY
CEMENTED
PIPE

FIG. 4

140

OBTAIN ACOUSTIC TOOL RESPONSE(S) — 142

DETERMINE MEASUREMENT M — 144

DETERMINE MEASUREMENT
VALUE FOR FREE PIPE CASING Mfpe — 146

DETERMINE MEASUREMENT VALUE
FOR FULLY CEMENTED CASING Mfc — 148

DETERMINE MEASUREMENT VALUE
AS FREE PIPE THRESHOLD Mfpt — 150

DETERMINE COVERAGE PERCENTAGE (CP) — 151

CALCULATE SOLIDS
PRESENCE INDICATOR, SOLIDS
INDEX, AND/OR SOLIDS AZIMUTHAL
COVERAGE INDEX USING Mfp,
Mfc, AND Mfpt AT DEPTH INTERVAL(S) — 152

FIG. 5

FIG. 6

EP 3 259 441 B1

146

(1) CALCULATE OR RETRIEVE THEORETICAL PREDICTION
OF MEASUREMENT VALUE OF FREE PIPE CASING
— 210

OR (2) OBTAIN LOG OVER KNOWN FREE CASING INTERVAL
— 212

SELECT (1) OR (2) OR
WEIGHTED COMBINATION OF (1) AND (2) TO BE
MEASUREMENT VALUE FOR FREE PIPE CASING Mfp
— 214

FIG. 7

148

(1) CALCULATE OR RETRIEVE THEORETICAL PREDICTION
OF MEASUREMENT VALUE OF FULLY CEMENTED CASING
— 220

OR (2) OBTAIN LOG
OVER KNOWN INTERVAL WHERE CEMENT HAS SET
— 222

SELECT (1) OR (2) OR
WEIGHTED COMBINATION OF (1) AND (2) TO BE
MEASUREMENT VALUE OF FULLY CEMENTED CASING Mfc
— 224

FIG. 8

150

(1) CALCULATE OR RETRIEVE THEORETICAL ACCURACY OF
MEASUREMENT VALUE FOR FREE PIPE Mfp AND ADD TO Mfp
— 230

OR (2) PERFORM STATISTICAL EVALUATION OF SECTION(S)
OF LOGGED INTERVAL WITH CONSISTENT CONDITION
— 232

SELECT (1) OR (2) OR
WEIGHTED COMBINATION OF (1) AND (2) TO BE
MEASUREMENT VALUE OF FREE PIPE THRESHOLD Mfpt
— 234

FIG. 9

FIG. 10

FLEXURAL ATTENUATION THRESHOLD IDENTIFICATION HISTOGRAMS

FIG. 11

FIG. 12

350

| 352 | 354 | 356 | 358 | 360 |
|---|---|---|---|---|
| OBJECTIVE | PLANNED CEMENT | ACOUSTIC IMPEDANCE IMAGE | FLEXURAL ATTENUATION IMAGE | INTERPRETATION |
| CEMENT JOB DESIGNED TO TOP OF LINER | | | | FREE PIPE |
| | | | | FULL AZIMUTHAL COVERAGE OF SOLIDS |

FIG. 13

EP 3 259 441 B1

| OBJECTIVE | FORMATION | DRILLING | WELLBORE | PLANNED CEMENT | ACOUSTIC IMPEDANCE IMAGE | FLEXURAL ATTENUATION IMAGE | INTERPRETATION |
|---|---|---|---|---|---|---|---|
| CEMENT JOB DESIGNED TO TOP OF LINER | | | LINER | | | | FREE PIPE |
| | | | | | | | FULL AZIMUTHAL COVERAGE OF SOLIDS |

FIG. 14

EP 3 259 441 B1

380

| 382 | 384 | 386 | 388 | 390 | 392 |
|---|---|---|---|---|---|
| OBJECTIVE | FORMATION | PLANNED CEMENT | ACOUSTIC IMPEDANCE IMAGE | FLEXURAL ATTENUATION IMAGE | INTERPRETATION |
| ISOLATION NEEDED BOTH OVER AND BETWEEN RESERVOIR SANDS | SAND X SAND Y SAND Z | PRIMARY CEMENT | | | FREE PIPE |
| | | | | | 50% SOLIDS NO AZIMUTHAL COVERAGE |
| | | | | | FULL AZIMUTHAL COVERAGE OF SOLIDS |

FIG. 15

| OBJECTIVE (382) | FORMATION (384) | PLANNED CEMENT (386) | ACOUSTIC IMPEDANCE IMAGE (388) | FLEXURAL ATTENUATION IMAGE (390) | INTERPRETATION (392) |
|---|---|---|---|---|---|
| ISOLATION NEEDED BOTH OVER AND BETWEEN RESERVOIR SANDS | SAND X | PRIMARY CEMENT / SQUEEZE CEMENT | | | SOLIDS EVIDENCE OF CHANNELING |
| | | | | | FREE PIPE |
| | SAND Y | | | | AZIMUTHAL SOLIDS |
| | | | | | FREE PIPE |
| | | | | | 50% SOLIDS NO AZIMUTHAL COVERAGE |
| | SAND Z | | | | FULL AZIMUTHAL COVERAGE OF SOLIDS |

410

412 414

FIG. 16

430

| 382 | 384 | 432 | 434 | 386 | 388 | 390 | 392 |
|---|---|---|---|---|---|---|---|
| OBJECTIVE | FORMATION | DRILLING | WELLBORE | PLANNED CEMENT | ACOUSTIC IMPEDANCE IMAGE | FLEXURAL ATTENUATION IMAGE | INTERPRETATION |
| ISOLATION NEEDED BOTH OVER AND BETWEEN RESERVOIR SANDS | SAND X SAND Y SAND Z | | LINER | PRIMARY CEMENT / SQUEEZE CEMENT | | | SOLIDS EVIDENCE OF CHANNELING |
| | | | | | | | FREE PIPE |
| | | | | | | | AZIMUTHAL SOLIDS |
| | | | | | | | FREE PIPE |
| | | | | | | | 50% SOLIDS NO AZIMUTHAL COVERAGE |
| | | | | | | | FULL AZIMUTHAL COVERAGE OF SOLIDS |

FIG. 17

FIG. 18

490

452

DATA RELEVANT
TO CEMENT

492

FORMATION

496

WELLBORE

500

CEMENT
DESIGN

502

CEMENT
EXECUTION

DRILLING 494

WELL
COMPLETION 498

**FIG. 19**

RETRIEVE PREVIOUSLY COLLECTED
DATA RELEVANT TO CEMENT — 512

DETERMINE FACTOR INDICATOR(S) — 514

USE INDICATOR(S) IN CEMENT
EVALUATION — 516

510

**FIG. 20**

FIG. 21

FIG. 22

600

602 604 606 608 610 612 614 616 618 620 622 624 626 628 630 632 634

| OBJEC-TIVES | FORMATION PRESSURE DENSITY POROSITY | DRILLING | WELL-BORE | WELL COMP-LETION AND CEN-TRALIZER DESIGN | CEMENTING | ATT | ATT SPI | VDL | AI | AI SPI | AI ACI | FA | FA SPI | FA ACI | VELOCITY AND CENTRALIZATION FROM THIRD ECHO INTERFACE | INTER-PRETATION |
|---|---|---|---|---|---|---|---|---|---|---|---|---|---|---|---|---|
| | | | | | | | | | | | | | | | 1480 M/S | FREE PIPE |
| AZIMUTHAL COVERAGE OVER SAND X | | | | | PLANNED LEAD CEMENT PLACE-MENT | | | | | | | | | | 1880 M/S | TOP OF LEAD |
| | | | | | WELL CLEAN SIMUL-ATION | | | | | | | | | | 1950 M/S | PARTIAL AZIMUTHAL COVERAGE OF SOLIDS OVER SAND X |
| | | | | | | | | | | | | | | | 1970 M/S | |
| AZIMUTHAL COVERAGE OVER SAND Y | | | | | PLANNED TAIL PLACE-MENT | | | | | | | | | | 1950 M/S | TOP OF TAIL |
| | | | | | | | | | | | | | | | 1970 M/S | FULL AZIMUTHAL COVERAGE OF SOLIDS OVER SAND Y |

*FIG. 23*

600

| 602 OBJEC-TIVES | 604 FORMATION PRESSURE DENSITY POROSITY | 606 DRILLING | 608 WELL-BORE | 610 WELL COMP-LETION AND CEN-TRALIZER DESIGN | 612 CEMENTING | CEMENT EVALUATION | | | | | | | | | 632 VELOCITY AND CENTRALIZATION ON FROM THIRD ECHO INTERFACE | 634 INTER-PRETATION | 635 REGIONS REQUIRING REMEDIAL CEMENTING | 636 PERFORATIONS | 637 SAND SCREEN PLACEMENT |
|---|---|---|---|---|---|---|---|---|---|---|---|---|---|---|---|---|---|---|---|
| | | | | | | 614 ATT | 616 ATT SPI | 618 VDL | 620 AI | 622 AI SPI | 624 AI ACI | 626 FA | 628 FA SPI | 630 FA ACI | | | | | |
| AZIMUTHAL COVERAGE OVER SAND X | | | | | | | | | | | | | | | 1480 M/S | FREE PIPE | | | |
| AZIMUTHAL COVERAGE OVER SAND Y | | | | | PLANNED LEAD CEMENT PLACE-MENT | | | | | | | | | | 1880 M/S | TOP OF LEAD | | | |
| | | | | WELL CLEAN SIMUL-ATION | | | | | | | | | | | 1950 M/S | PARTIAL AZIMUTHAL COVERAGE OF SOLIDS OVER SAND X | | | |
| | | | | | PLANNED TAIL PLACE-MENT | | | | | | | | | | 1970 M/S | TOP OF TAIL | | | |
| | | | | | | | | | | | | | | | 1950 M/S | FULL AZIMUTHAL COVERAGE OF SOLIDS OVER SAND Y | | | |
| | | | | | | | | | | | | | | | 1970 M/S | | | | |

*FIG. 24*

FIG. 25

900
Computing
System

908
Output Device(s)

912
Network

904
Memory

902
Computer
Processor(s)

906
Storage
Device(s)

910
Input Device(s)

FIG. 26

810

ZONAL ISOLATION OBJECTIVES DRILLING
GEOMECHANICS STUDY AND/OR APPROVED
OFFSET WELLS ANALYSIS

811

812

DRILLING
PLAN

WELLBORE
QUALITY
FOR CEMENT
PLACEMENT

813

CEMENTING
PLAN

CEMENT
PLACEMENT
& MUD
REMOVAL
FOR CEMENT
EVALUATION

814

CEMENT
EVALUATION
PLAN

CEMENT
EVALUATION
INTERPRETATION
FOR ZONAL
ISOLATION
ASSURANCE

815

SET ZONAL ISOLATION PARAMETERS (ZIP)
(MAX, ACCEPTABLE RANGE, MIN)
DEVELOP CONTINGENCY PLANS

816

GENERATE DrillMAP / CemMAP
PER SECTION/PER WELL

817

PRE-JOB MEETING
BRIEF ALL PARTIES ON
PROCEDURES,
COMMUNCIATIONS AND
ZONAL ISOLATION
CRITICAL PARAMETERS

FIG. 27

MONITOR DRILLING
ACTIVITIES
GENERATE DrillCAST
(REAL-TIME LWD
CALIPER/MWD SURFACE
DATA)
(DAILY DRILLING REPORT) ⌐ 818

RE-START
AT STEP 2 ⌐ 821

819

ZIP IN RANGE? → NO → UN-PLANNED EVENT? ⌐ 820

YES (to RE-START AT STEP 2)

NO

YES

SELECT APPLICABLE
REMEDIAL ACTION ⌐ 822

UPDATE
PRELIMINARY
CEMENTING PLAN ⌐ 824

SELECT APPLICABLE
CEMENTING
CONTINGENCY PLAN ⌐ 823

GENERATE
CemCAST ⌐ 825

VERIFY CemCAST IMPACT ON
CEMENT EVALUATION
PROGRAM ⌐ 826

FIG. 28

DRILL AHEAD TO TOTAL DEPTH ⌐ 827

UPDATE CEMENTING JOB DESIGN AT TOTAL DEPTH — 828

ZONAL ISOLATION OBJECTIVES ACHIEVABLE? — 829

NO

MODIFY CEMENTING JOB DESIGN — 830

NO

APPROVED? — 831

YES

YES

UPDATE CEMENT EVALUATION PROGRAM AT TOTAL DEPTH — 832

CEMENT JOB EXECUTION — 833

CEMENT IN PLACE — 834

POST CEMENT PLACEMENT DATA ANALYSIS GENERATE "CEMENTING ANSWER PRODUCT" — 835

PERFORM CEMENT EVALUATION LOGGING — 836

ISSUE EVALUATION — 837

FIG. 29

**EP 3 259 441 B1**

**Patent documents cited in the description**

- US 62117895
- US 2014309936 A1
- US 2014192619 A1